(19) Europäisches Patentamt / European Patent Office / Office européen des brevets

(11) **EP 4 262 319 B1**

(12) **EUROPEAN PATENT SPECIFICATION**

(45) Date of publication and mention
of the grant of the patent:
**16.10.2024 Bulletin 2024/42**

(21) Application number: **22305556.7**

(22) Date of filing: **14.04.2022**

(51) International Patent Classification (IPC):
***H04W 74/0833*** *(2024.01)*

(52) Cooperative Patent Classification (CPC):
**H04W 74/0833**

(54) **ENHANCED TRANSMISSION OF RANDOM ACCESS SIGNALS**

VERBESSERTE ÜBERTRAGUNG VON DIREKTZUGRIFFSSIGNALEN

TRANSMISSION AMÉLIORÉE DE SIGNAUX D'ACCÈS ALÉATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.10.2023 Bulletin 2023/42**

(73) Proprietor: **Eurecom
06410 Biot (FR)**

(72) Inventors:
• **WAGNER, Sebastian**
**06410 BIOT (FR)**
• **KNOPP, Raymond**
**06410 BIOT (FR)**

(74) Representative: **Atout PI Laplace
Immeuble Up On
25 Boulevard Romain Rolland
CS 40072
75685 Paris Cedex 14 (FR)**

(56) References cited:
**GB-A- 2 562 100**

• **NOKIA ET AL: "On 2-step RACH Channel
Structure", vol. RAN WG1, no. Reno, USA;
20190513 - 20190517, 13 May 2019 (2019-05-13),
XP051728197, Retrieved from the Internet
<URL:http://www.3gpp.org/ftp/Meetings%5F3GP
P%5FSYNC/RAN1/Docs/R1%2D1906746%2Ezip
> [retrieved on 20190513]**

# EP 4 262 319 B1

## Description

### TECHNICAL FIELD

The disclosure generally relates to digital communications and in particular to device and a method for enhanced transmission of random access signals.

### BACKGROUND

Many technical challenges have arisen to enable the transition of Mobile communication systems from the 4th generation (4G) mobile communication system to the future 5th generation (5G) mobile communication systems and beyond generations. In particular, 5G New Radio (5G NR) technology is being standardized to provide rich, reliable and hyper-connected communications.

A communications system forms a network comprising base stations providing radio coverage over a geographical area forming a cell. The cells serve User equipments (UE) through the base stations. A User equipment can communicate using base stations. A user equipment transmit data over an air or radio interface to the base stations in uplink (UL) transmissions and radio base stations transmit data over an air or radio interface to the user equipments in downlink (DL) transmissions.

Existing mobile communication systems use multiple-access technologies to support communication with multiple users by sharing available system resources.

Examples of such multiple-access technologies include orthogonal multiple access (OMA) techniques such as time division multiple access (TDMA), frequency division multiple access (FDMA) or code division multiple access (CDMA) together. OMA schemes provide orthogonal access to the users in time, frequency, code or space. However, none of these techniques can meet the high demands of future radio access systems.

Non-orthogonal multiple access (NOMA) technology has been proposed as a candidate radio access technology for the 5G networks.

NOMA differs from OMA schemes in that each user operates in the same band and at the same time where they are distinguished by their power levels. NOMA uses superposition coding at the transmitter such that the successive interference cancellation (SIC) receiver can separate the users both in the uplink and in the downlink channels.

Non-orthogonal Multiple Access (NOMA) has been studied for 3GPP Release-15 (3GPP TR 38.812: Study on Non-Orthogonal Multiple Access (NOMA) for NR V16.0.0," 2018-12) without resulting in a specification. One use case addressed in this study is the mMTC scenario with massive number of connection and low control signaling overhead where the UEs transmit in RCC inactive mode (called RRC_INACTIVE state) without a RACH procedure.

A Random Access (RACH) refers to a procedure where a User Equipment (UE) wants to create an initial connection with the network. In some networks, like LTE, the RACH procedure is performed in 4 steps (4 step RACH) using 4 signals transmitted between the UE and the base station.

A two-step RACH procedure (two step RACH WI) was approved for 3GPP Release 16 (ZTE, "RP-200085 Revised WID on 2-step RACH for NR," 2020) after the failure of specifying a design based on non-orthogonal multiple-access (NOMA). The two-step RACH procedure (two-step RACH) improves the overall latency of RACH procedure.

The two-step RACH procedure is performed in 2 steps using only two signals transmitted between the UE and the base station, including a message transmission (MsgA) from the User Equipment to the base station and a message reception at the User Equipment from the base station. The message MsgA transmitted from the User Equipment to the base station include a PRACH preamble transmission and a PUSCH transmission.

For the transmission of message MsgA, two preamble groups can be defined. Each preamble group is linked to a specific configuration of the PUSCH transmission of message MsgA (referred to hereinafter as 'MsgA-PUSCH configuration').

The MsgA-PUSCH configuration includes:

- PUSCH transmission parameters; and
- the time-frequency mapping of the PUSCH Occasions (PO).

According to the conventional two-step RACH WI procedure, the UE directly transmits the message A (MsgA) which comprises the PRACH preamble and the PUSCH transmission, without for the base station to allocate PUSCH resources after the PRACH preamble reception.

With both UL and DL-oriented small data traffic, the requirements of the different packets may vary significantly so that PUSCH configuration information are needed to configure the PUSCH carrying this traffic.

An existing method specified in Rel-16 RAN1 standardization work on 2-step RACH, uses a signaling through preamble index, which reduces the preamble resource pool. According to this approach, the preamble pool can be

2

separated into 2 sets, each of them being associated with a different PUSCH configuration. However, only two PUSCH configurations can be used.

Another approach relies on transmitting control information within MsgA that is separately decoded, and contains the necessary information to decode the PUSCH.

Therefore, existing RACH procedures only provide two possible MsgA PUSCH semi-statically configured configurations so that the PUSCH channel is not adapted to the different kinds of traffic (for example in terms of payload size, QoS requirements, etc).

3GPP document R1-1906746 by NOKIA ET AL: "On 2-step RACH Channel Structure" discloses transmitting uplink control information to assist the eNB to decode the MsgA payload.

Document GB 2 562 100 A discloses the use of an enhanced preamble to convey additional information.

There is accordingly a need for improvements in the RACH procedure.

**Summary of the disclosure**

To address these and other problems, there is provided a method of performing a RACH procedure to provide a User Equipement (UE) access to a network in a communication system , the network comprising at least one base station, the RACH procedure comprising at least one step in which a RACH message MsgA is sent from the UE to the base station on one or more uplink channels, the message comprising a PRACH preamble transmission, the PRACH preamble being selected among a number of available preambles, the PRACH preamble transmission being made within a set of RACH slots, a RACH slot comprising a number of RACH occasions, the PRACH preamble being sent using a PRACH occasion corresponding to a time-frequency resource. Advantageously, the method comprises encoding auxiliary information in the PRACH occasions and transmitting the auxiliary information to the base station , the auxiliary information being encoded using an outer code and an additional code determined from the bits of the PRACH preamble.

In some embodiments, the number of PRACH occasions being N, the encoding of the auxiliary information comprises:

- splitting an input message m comprising B channel bits into a first component comprising $B_v$ bits corresponding to the PRACH preamble bits and a second component comprising $B_h$ bits corresponding to the auxiliary information bits, such that $B = B_v + B_h$;
- generating a vertical code from the first component of $B_v$ bits;
- generating a horizontal code from the second component of $B_h$ bits, which provides the outer code;
- combining the vertical code with the horizontal code which provides the encoded auxiliary information $\bar{r}_{vm}(n)$ in PRACH occasion n.

In one embodiment, the horizontal bits are such that $2^{B_v}$ is equal to the number of available preambles.

The combining step may comprise determining the encoded auxiliary information as the product of the vertical code and the horizontal code or as the product of the vertical code, a phasor term and the horizontal code.

In one embodiment, if the number $B_h$ is inferior or equal to $\log_2 N$, an orthogonal encoding scheme may be used to generate the outer code W from the horizontal component, the PRACH preamble constituting the vertical code generated from the $B_v$ bits.

In one embodiment, the orthogonal encoding scheme may consist in determining the outer code W as a discrete Fourier transform (DFT) matrix of size N, and the codewords $w_m$ of the outercode W being the rows or the columns of the DFT matrix, such that $m = 0,1,..., 2^{B_h-1}$.

Alternatively, if the number of bits $B_h$ is superior to $\log_2 N$, the outer code may be generated using a non-coherent linear code.

In particular, the outer code may be chosen as a codeword $\lfloor m2^{-B_v} \rfloor$ from a $(N,B_h)$ linear error correcting code, having a length N and a rank ($B_h$), the linear error correcting code being represented by a generator matrix $G(B_h,N)$ given in the form:

-

$$G(B_h, N) = (I_N \quad G_{N \times (B_h)-N})$$

In some embodiments, the vertical code may be generated as a Zadoff-Chu sequence for the preamble v, and wherein the combining step is performed according to the following Equation:

$$\bar{r}_{vm}(n) = r_v w_{mn}$$

$w_{mn}$ being the $n^{th}$ component of codeword $w_m$ of the outer code *W*, $r_v$ denoting the Zadoff-Chu sequence generated for the preamble v transmitted in all PRACH occasions and $\bar{r}_{vm}(n)$ designates the encoded auxiliary information m transmitted in PRACH occasion n.

In one embodiment, the random access preamble may be identified based on information on a number of synchronization signal blocks (SSBs) per RACH occasion, and the outer code may be applied to time-consecutive RACH occasions per frequency resource per synchronization signal blocks SSB.

In some cases, the PRACH preamble may be a short PRACH preamble having a format derived from a PRACH format (AC) deprived of repetitions, specifying a duration of one modulation symbol or a non-integer number of modulation symbols, a CP length related to the time sample, and a sequence length depending on the time sample.

In some embodiments, the random access preamble may be identified based on information on a number of synchronization signal blocks (SSBs) per RACH occasion, a mapping being defined between a sync signal block (SSB), the mapping comprising a:

- RRC parameter specifying the number of time-consecutive RACH Occasions for transmission of the PRACH preamble per SSB, and/or
- another RRC parameter having integer value inferior or equal to the total number of consecutive ROs per SSB and defining the number of RACH Occasions per SSB for the PRACH preamble transmission, and/or
- a further RRC parameter indicating the number of PRACH preambles per SSB reserved for the transmission of the PRACH preamble among a total number of available preambles.

In some embodiments, only a subset of the total number of the PRACH slots may be used for the PRACH preamble transmissions.

The outer code may be applied on consecutive RACH Occasions in time and repeated in frequency domain.

The PRACH transmission may use Frequency Division Multiplexing (FDM), the PRACH preamble being repeated on the available frequency resources, with a same or different encoding on each resource, or the PRACH preamble being transmitted on a single frequency resource.

In some embodiments, the auxiliary information may comprise at least a part of user data and/or of user information and/or of control information related to subsequent PUSCH transmissions.

In some embodiments, the RACH message may be configured to transmit user data comprising D bits, the auxiliary information comprising B bits, and:

- if D<=B, the auxiliary information comprise the D bits;
- if D>B, the RACH message further comprises a PUSCH data transmission, the PRACH preamble and the PUSCH data transmission being sent in a different time slot, and the auxiliary information comprises only a part of the user data bits comprising Dp bits, the remaining bits Du of the user data being transmitted in the PUSCH transmission.

In some embodiments, the RACH message may further comprise a PUSCH transmission, the PRACH preamble and the PUSCH transmission being sent in a different time slot, and the encoded auxiliary information may comprise PUSCH transmission parameters of the PUSCH transmission. The auxiliary information may be used by the base station to decode the PUSCH transmission.

The PUSCH transmission parameters of the PUSCH transmission may comprise at least one PUSCH transmission parameters among a MCS parameter, a Time-frequency resources parameter, a PUSCH Mapping Type parameter, a DMRS configuration parameter, a Redundancy Version parameter, and Repetition parameter.

The PUSCH transmission parameters may be stored in at least one data structure comprising entries, each entry corresponding to an index, the index to the data structure entry being comprised in the auxiliary information.

In one embodiment, the auxiliary information may comprise repetition mode information indicating whether repetition is used for the PUSCH transmission and/or information about the type of PUSCH Transmission.

In one embodiment, the auxiliary information may comprise a number of extension bits extending the PRACH preamble capacity.

There is further provided a user Terminal configured to performing a RACH procedure to access to a network in a communication system, the network comprising at least one base station, the RACH procedure comprising at least one step in which a RACH message MsgA is sent from the user terminal to the base station on one or more uplink channels, the message comprising a PRACH preamble transmission, the PRACH preamble transmission being made within a set of RACH slots, a RACH slot comprising a number of RACH occasions, the PRACH preamble being sent using a PRACH occasion corresponding to a time-frequency resource. The user terminal comprises an encoding unit configured to encode auxiliary information in the PRACH occasions and transmit the encoded auxiliary information to the base station, the auxiliary information being encoded using an outer code and an additional code determined from the bits of the PRACH preamble.

**Brief description of the drawings**

The accompanying drawings, which are incorporated in and constitute a part of this specification, illustrate various embodiments of the disclosure together with the general description of the disclosure given above, and the detailed description of the embodiments given below.

Figure 1 schematically represents an exemplary communication system in which embodiments of the present disclosure may be implemented.

Figure 2A is a flowchart representing a method of performing a RACH procedure according to embodiments of the invention.

Figure 2B represents the basic format of a PRACH preamble sent by a UE to the base station gNB over the PRACH channel.

Figure 3 shows exemplary PRACH formats that may be used in some embodiments of the invention.

Figure 4 shows an example of PRACH format with a horizontal code.

Figure 5A is a diagram schematically representing a User Equipment according to some embodiments.

Figure 5B is a block diagram representing the outer code generator according to an embodiment in which the outer code is generated as an outer code using a generator matrix.

Figure 6 depicts a PRACH format A0 without repetition, according to some embodiments.

Figure 7 depicts an exemplary PRACH format A0 without repetition, according to an embodiment.

Figure 8 shows a mixed configuration with a conventional PRACH format C0 and a PRACH format A0, according to an embodiment.

Figure 9 shows an exemplary RACH configuration in spectrum range FR1 where one beam SSB is associated with 8 RACH Occasions and where all K preambles are available per RO.

Figure 10 depicts a RACH configuration in FR1 with 4 beams SSBs.

Figure 11 represents another exemplary RACH configuration in which the RACH Occasions are frequency multiplexed with two frequency locations and 2 beams.

Figure 12 represents another example of a RACH configuration, in which 32 preambles are allocated per SSB and using 2 beams sharing the same RO.

Figure 13 represents another exemplary RACH configuration using two beams, one of the two beams being associated to 8 ROs in a FDM setting.

Figure 14 shows a time/frequency diagram showing an example of PRACH and MsgA PUSCH resource allocation with dynamically configurable PUSCH transmission parameters, according to some embodiments.

**Detailed description**

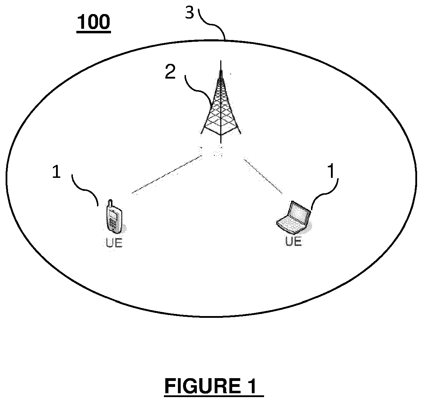

Referring to Figure 1, there is shown an exemplary communication system 100 in which embodiments of the present disclosure may be implemented.
The communication system 100 comprises a mobile communication network 3, one or more user terminals 1 (also referred to as User Equipments UEs, according to 3GPP standard), and one or more base stations 2 (also referred to as a Node, designated by a derivative of the term 'NodeB' such as gNodeB node or gNB in 5G NR). The User terminals 1 will be referred to hereinafter as User Equipments. The base station 2 is associated with a cell defining a geographical cell area. The cell associated with the base station 2 is served by the base station.

The communication system 100 may be for example a wireless communication system such as a new radio (NR), a 5G and beyond 5G network.

Although reference will be mainly made to 3GPP network in the following description, the skilled person will readily understand that the embodiments of the disclosure also apply to similar or equivalent networks, such as a successor of the 3GPP network. In the following description, enclosed drawings and appended claims, the use of the term 3GPP and terms related to the 3GPP network should be interpreted accordingly. Similarly, although reference will be made to 5G NR, for illustration purpose, such reference should be interpreted as encompassing any future xG network (6G and beyond) having similar functional components.

A user equipment UE 1 is configured to transmit data to a base station 2 (such as a gNB node) on one or more uplink (UL) channels. The User Equipment 1 may receive data from the base station through one or more downlink channels (DL).

A user equipment 1 may be fixed or mobile and/or may be remotely monitored and/or controlled. A user equipment 1 may be equipped with power sources that provide power to the different components ensuring the UE operation. A User Equipment 1 may be, without limitation, a mobile phone, a computer, a laptop, a tablet, a drone, an IoT device, etc.

The communication network 3 may be any wireless network enabling IoT. Exemplary wireless networks comprise low-power short range networks and LPWANs.

Further, the communication network 3 may accommodate several pairs of user equipments 1. In such embodiments, multiple access techniques and/or network coding techniques may be used in combination with error correction codes and modulation. Exemplary multiple access techniques comprise without limitation Time Division Multiple Access (TDMA), Frequency Division Multiple Access (FDMA), Code Division Multiple Access (CDMA), and Space Division Multiple Access (SDMA), and Non-Orthogonal Multiple Access (NOMA) technology.

In some embodiments, data transmission between a UE 1 and a base station 2 in the communication system 100 may correspond to an uplink communication scenario during which the base station 2 receives data from the UE 1 through the uplink channels (the transmitter is the UE 1 and the receiver is the base station 2) or a downlink communication scenario during which the base station 2 transmit data to the UE 1 through the downlink channels (the transmitter is the base station 2 and the receiver is the UE 1).

The UEs 1 and/or the base stations 2 may be equipped with a plurality of transmit and/or receive antennas, and may implement space-time coding and/or space-time decoding techniques may be used in combination with coded modulations for encoding data both in the time and space dimensions.

A UE 1 may communicate with a base station 2 using a RRC mechanism (RCC is the acronym for Radio Resource Control).

Radio Resource Control (RRC) refers to a layer within the 5G NR protocol stack. The RRC mechanism exists only in the control plane, in a UE 1 and in the base station 2 (gNB).

A UE 1 and a base station 2 may communicate through the communication network 3, via the radio channel using the RRC control mechanism. RRC enables both parties (UE and base station) of a communication to exchange information. Further, the RRC operates within each communicating party (e.g. UE 1 and base station 2) as a control center for all of the lower layers within each system, the lower layers within the UE or the base station representing 'Radio Resources', that is resources required to enable radio communication. The RRC is configured to control all these Radio Resources (for example PHY, MAC, RLC, etc) by configuring them to enable communication between UE and the base station (for example gNB).

The behaviour and functions of RRC are defined by the current state of RRC.

For example in 5G NR, the RRC defines three states (or modes):

- A RRC Idle state (or idle mode) called RRC_IDLE state,
- A RRC connected state (or connected mode) called RRC_CONNECTED state, and
- A RRC inactive state (or inactive mode) called RRC_INACTIVE state.

The 'RRC INACTIVE' state is a state introduced in NR.

For each RRC state, applicable functions are defined according the 3GPP NR standard. Further, the state transitions between two RRC states are defined by state transitions conditions. The state transitions condition may be represented by a state machine.

The UE 1 may be in RRC idle state, after power up.

When a UE 1 wants to connect for outgoing data, calls or SMS (Short Messaging Service), the UE 1 establishes connection with the network using an initial access via RRC connection establishment procedure.

As used herein, 'initial access' refers to a process between the UE 1 and the base station gNB(Network) 2 in order for UE to acquire Uplink Synchronization and obtain specified ID for the radio access communication, through the RACH procedure. The uplink synchronization refers to a process enable the UE 1 to determine the exact timing when it should send the uplink data (e.g. PUSCH data). As a base station 2 (gNB) may serve multiple UEs 1 and the communication system 100 has to ensure that the uplink signal from each UE 1 be aligned with a common timer of the network, this may involve adjusting the UE uplink timing through the RACH procedure.

Synchronization may be implemented by creating a predefined signal called Sync Signal, by putting the Sync Signal into a specific modulation symbol in a specific subframe and transmitting it. The synchronisation signals therefore comprises modulation symbols (for example OFDM symbols). A UE 1 may be configured to detect the exact timing from decoding the sync signal.

The synchronization signals may be multiplexed, using multiplexing such as frequency division multiplexing FDM or time division multiplexing TDM with other channels.

The UE 1 already has or can derive the sync signal so that it can search and detect the data from the stream of data reaching the UE 1. The sync signal being located in the predefined location in time, the UE 1 can detect the exact timing from the decoded sync signal.

Once the RRC connection is established, the UE is in RRC_CONNECTED state.

In an application of the disclosure to a 5G NR communication system 100, the UE 1 may be in the RRC_CONNECTED state when an RRC connection has been established or in the RRC_INACTIVE state when the RRC connection is suspended. Otherwise (if no RRC connection is established), the UE 1 is in RRC_IDLE state.

The UE 1 may share a random-access channel (RACH) to access the network for communications.

For example, the RACH may be used to setup calls, to access the network for data transmissions, for initial access to a network when the UE transitions from the RRC connected state (RRC_CONNECTED) to the RRC inactive state (RRC_INACTIVE state), or for handover.

UEs in RRC_INACTIVE state may transition into RRC_CONNECTED mode using a RRC resume procedure to transmit user-plane data. This transition may require to complete the RACH procedure.

RACH may be used for downlink (DL) and/or uplink (UL) data arrival when the UE device 1 is in RRC idle state (RRC_IDLE) or in the RRC inactive state (RRC_INACTIVE), or transitions to the RRC connected state (RRC_CONNECTED).

The Random Access (RACH) procedure refers to the procedure where the User Equipment (UE) 1 requires the creation of an initial connection with a network 3 using the RACH channel.

Once the RACH procedure is completed, the UE 1 may move to the connected state (RRC_CONNECTED state).

In an application of the disclosure to 5G NR, the RACH procedure may be implemented to:

- initial access from RRC_IDLE;
- RRC Connection Re-establishment procedure;
- handover;
- DL or UL data arrival during RRC_CONNECTED when UL synchronisation status is "non-synchronised";
- transition from RRC_INACTIVE;
- to establish time alignment at SCell addition;
- request for Other Synchronization Information; or
- beam failure recovery.

The RACH procedure (also 'called Random Access process') may be performed in 4 steps (4-step RACH procedure).

The four step RACH procedure comprises exchange of 4 signals. In a first step (step 1), the UE 1 sends a Random Access Preamble Transmission in a message Msg1 to the base station 2 to transmit the RACH preamble on a determined PRACH time-frequency resource to an appropriate beam of the base station 2. In a second step (step 2), the base station 2 sends to the UE 1 a Random Access Response in a second message Msg2 (RA response over the PDSCH channel), the random access response comprising parameters such as the random access preamble identifier, timing alignment information, initial uplink grant and a temporary cell radio network temporary identifier (C-RNTI). In a third step (step 3), the UE 1 sends a Scheduled UL Transmission in a third message Msg3, comprising uplink scheduling information, over the PUSCH channel. In a fourth step (step 4), the base station 2 sends to the UE 1 Contention Resolution in a fourth message Msg4.

Alternatively, the RACH procedure may be performed in 2 steps (2-step RACH procedure) using 2 signals exchanged between the UE and the base station (gNB), for example in a 5G NR network.

The 2-step RACH is applied to RRC_inactive and RRC-connected and RRC-IDLE states.

The RACH channel structure comprises a RACH preamble and data.

According to the 2-step RACH procedure, in a first step (step 1) a first message MsgA may be sent from the UE 1 to the base station 2 on the physical random access channel (PRACH).

According to the two-step RACH procedure, a first message MsgA is sent from the UE to the base station on a physical random access channel (PRACH). The message MsgA may include a RACH preamble for random access and a demodulation reference signal (RS) for RACH payload demodulation. eMSG1 may also include a RACH message containing the UE-ID and other signaling information (e.g., buffer status report (BSR)) or scheduling request (SR).

In a second step (step 2), the base station 2 responds with a random access response (RAR) message MsgB which may include the ID of the RACH preamble, a timing advance (TA), a back off indicator, a contention resolution messages, UL/DL grant, and a transmit power control (TPC) commands.

The following description of some embodiments of the invention will be made with reference to the 2-step RACH procedure for illustration purpose, although the invention applies to any similar RACH process such as 4-step RACH procedure comprising steps equivalent to step 1 of the 2-step RACH procedure. Indeed, step 1 of the 2-step RACH procedure is equivalent to step 1 and step 3 of the 4-step RACH procedure and step 2 of the 2-step RACH procedure is equivalent to step 2 and step 4 of the 4-step RACH procedure.

- the two-step RACH procedure comprises:
- transmitting a message MsgA from the UE1 to the base station 2; and
- transmission of a message MsgB from the base station 2 to the UE1.

The message MsgA comprises:

- a PRACH Preamble Transmission; and
- a PUSCH Transmission.

The transmission of the PRACH preamble by the UE 1 to the base station 2 comprises a Preamble Selection and a Preamble transmission (similarly to the 4-Step RACH procedure).

The PRACH preamble selection comprises selecting a preamble among a number K of available preambles (for example K=64 in 5G NR).

In response to the msgA transmission, UE expects a Response from the base station 2 comprising the MsgB information.

According to the conventional two-step RACH procedure, the UE directly transmits the message MsgA which comprises the PRACH preamble and the PUSCH transmission, without for the base station gNB to allocate PUSCH resources after the PRACH preamble reception.

This reduces the initial access time, which represents the time required for the UE to transition into a RRC_CONNECTED state.

In some cases, if the UE is in RRC_CONNECTED state, it may use pre-configured resources to transmit data, such as for example configured grant type resources. In some cases (for example according to the two-step RACH WI procedure specification in 3GPP Release 17), the UE 1 may not be required to be in the RRC_CONNECTED state to enable User-plane data transmission in MsgA, on small data transmission (SDT). In some applications of the invention, Small Data Transmission (SDT) is only allowed in RRC_INACTIVE.

The PRACH Preamble corresponds to a specific pattern (also called "Signature").

The selection of a PRACH preamble by the UE1, for the PRACH preamble transmission, may comprise selecting one of the PRACH preambles among the total number K of available preambles (for example K=64). This selection may be performed randomly.

The PRACH preamble and the PUSCH transmission may not be transmitted in the same slot. The minimum time gap between the PRACH preamble and the PUSCH transmission may be set to a number of symbols for a given frequency range of Subcarrier Spacing (SCS), such as for example 2 or 4 symbols for 15/30kHz SCS and 60/120kHz SCS, respectively.

PRACH Preamble transmission may be made within a configurable subset of RACH slots that repeats itself every RACH configuration period, within a cell. The amount of resources for the PRACH is configurable. The resources for PRACH may be set in time and frequency. The time part of the PRACH resources indicates how often it is occurring in UL and the frequency part of the PRACH resources indicates how wide the resources are.

A RACH periodicity indicates how often the resources pattern with resources is repeated (RACH Slot).

Each RACH Slot comprises a number of RACH occasions.

A RACH Occasion (RO) refers to an area specified in time and frequency domain that are available for the reception of RACH preamble, and indicates how many different resources there are for each RACH slot. Therefore, within each RACH Slot, there may be a number of RACH occasions which indicates how many different resources there are for the RACH slot.

A PRACH Occasion specifies when to send PRACH. In NR, the time and frequency resource on which a PRACH preamble is transmitted is defined as a PRACH occasion.

A PUSCH Occasion (PO) associated with a PUSCH transmission is defined by a frequency resource and a time resource and is associated with a DMRS resource (DRMS stands for 'DeModulation Reference Signal'). A PUSCH occasion therefore provides time and frequency resources where a UE can send PUSCH in the PUSCH transmission.

Each PRACH preamble is mapped to a specific PO, in frequency then DMRS and time domain.

By detecting the RACH preambles, the base station gNB can therefore identify exactly which PO to decode.

The PRACH preamble may be used to perform:

- time-frequency synchronization; and/or
- PUSCH resource identification.

The message MsgA comprises a message payload having a payload size. The message payload in PUSCH may depend on the event ('triggering event') that triggered the RACH procedure. The triggering event may be for example an initial access, a handover, a RRC resume request, etc. The payload size may be for example equal to 56 bits or 72 bits. Larger payloads may be used for the small data transmission (SDT) use case.

In 3GPP Release 17, Small Data Transmission (SDT) WI was approved and is driven by radio layer RAN2 (RAN stands for Radio Access Network) to reduce the latency for transmission of small packets if the UE is in a RRC_INACTIVE state.

Existing 2-step RACH procedures provide only 2 MsgA PUSCH configurations so that the PUSCH channel is not well adapted to the different kinds of traffic (for example in terms of payload size, QoS requirements, etc.).

Embodiments of the present disclosure provide a UE 1 and a method implemented in a UE1 to perform a enhanced RACH procedure.

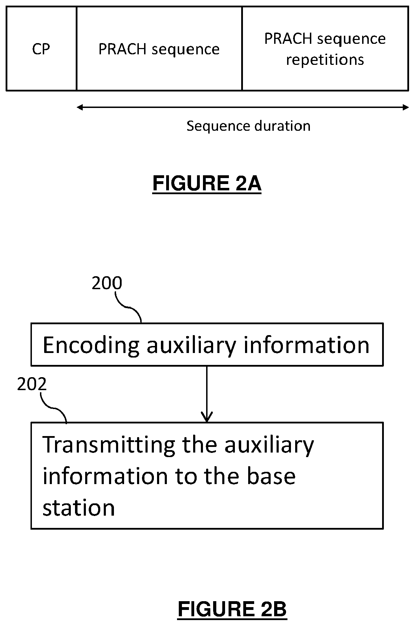

Figure 2A is a flowchart representing a method of performing a RACH procedure to provide the UE 1 access to the network 3 according to embodiments of the invention. Figure 2A specifically shows the first step (Step 1) of the 2-step RACH procedure corresponding to message MsgA (this alternatively applies to the equivalent steps Step 1 and Step 3 of the 4-step RACH procedure or to any equivalent RACH procedure comprising at least one step in which at least one RACH message (MsgA for 2-step RACH procedure) is sent from the UE 1 to the base station 2 on one or more uplink channels, the at least one message (MsgA for 2-step RACH procedure) comprising a PRACH preamble transmission. The message Msg1 may comprise a PUSCH data transmission sent in a different time slot. The PRACH preamble is selected among a number of K available preambles. The PRACH preamble transmission is made within a set of RACH slots, a RACH slot comprising a number of RACH occasions. The PRACH preamble is sent using a PRACH occasion corresponding to a time-frequency resource.

According to the embodiments of the invention, the method comprises encoding auxiliary information in said PRACH occasions in step 200, and transmitting 202 said auxiliary information to the base station 2, the auxiliary information being encoded using an outer code W and an additional code determined from the bits of the PRACH preamble.

The auxiliary information may comprise for example PUSCH transmission information when the RACH message (MsgA) comprises a PUSCH transmission or self-contained information.

In some embodiments the encoded auxiliary information may by encoded PUSCH configuration information related to the subsequent PUSCH transmission. Such PUSCH configuration auxiliary information may thus be used to dynamically control parameters of the subsequent PUSCH transmission forming part of message MsgA. The encoded auxiliary information transmitted on the PRACH occasions may for example enable to dynamically adapt the transmission parameters to the individual channel or traffic type, for example by dynamically varying the Modulation and Coding Scheme (MCS).

This obviates the need for separating the preamble pool into two sets each associated with a respective semi-static PUSCH configuration. In contrast, according to the embodiment of the invention, the preamble pool remains unchanged and the PUSCH configuration parameters are signaled via an outer code encoding the PUSCH configuration information (auxiliary information) onto the PRACH occasions (PO).

The embodiments of the disclosure thereby enable encoding auxiliary information in the PRACH preamble transmission, in any PRACH preamble formats, such as existing or future PRACH formats.

Figure 2B represents the basic format of a PRACH preamble sent by the UE 1 to the base station gNB 2 over the PRACH channel (for example to obtain the UL synchronization). The PRACH preamble comprises two parts:

- cyclic prefix (CP), and

- a Preamble Sequence with may be repeated using a number of sequence repetitions.

A number K of preambles is defined in each time-frequency PRACH occasion (PO). In 5G NR, K=64 for example.

The PRACH preamble sequence corresponds to a Sequence duration.

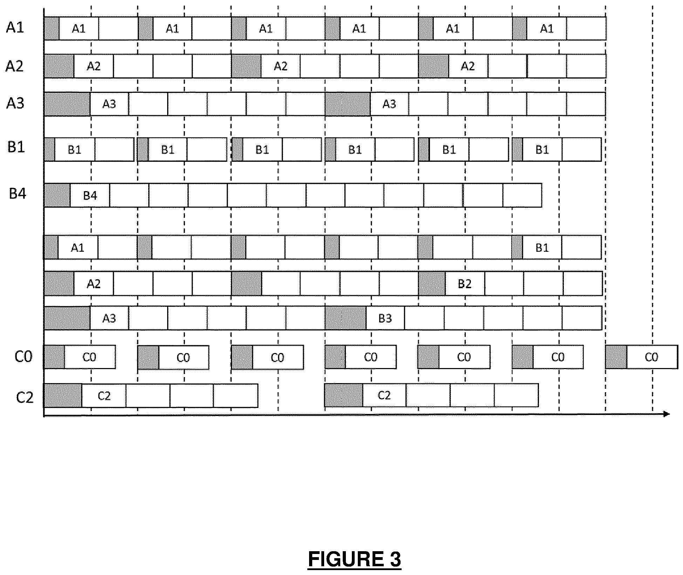

In addition, the PRACH configuration includes a parameter specifying the number of PRACH occasions within a slot, i.e. multiple occasions of the basic PRACH format. Figure 3 shows various exemplary PRACH formats for example, format A1 is configured with 6 occasions.

The PRACH Preamble sequence may be generated based on the Zadoff Chu based sequence. Zadoff-Chu (ZC) sequences enable encoding up to a number of K RACH preambles (e.g. in 5G NR, K=64), through a combination of different cyclic shifts and roots.

The generation of a PRACH Preamble sequence based on the Zadoff Chu based sequence may comprise:

- generating a base Zadoff Chu Sequence;
- performing cyclic shift which comprises applying cyclic shift to the generated base Zadoff Chu Sequence by a term, which provides an intermediary sequence. Several other intermediary sequences may be generated from the base Zadoff Chu Sequence by applying cyclic shifting;
- spreading the generated intermediary sequence over frequency domain, which provides a RACH preamble sequence by applying IFFT (Inverse fast Fourier transform).

The PRACH preamble sequence may for example corresponds to one or multiple RACH sequence repetitions of the base length 139-ZC sequence.

A length-139 ZC sequence can encode up to 138 PRACH sequences. If only every second cyclic shift is used, 64 preambles may be encoded with a single root, i.e. 6 bits.

The PRACH preamble sequences may be long, for example of length 839 symbols, or short, for example of length 139 symbols.

The preamble may have different PRACH formats.

For long PRACH preambles, several PRACH preamble formats are defined with one or more PRACH OFDM symbols and different cyclic prefix and guard time values.

For short PRACH preambles, a number of PRACH preamble formats are also defined, such formats defining the number of repetitions of the preamble sequences associated with the format in a RACH occasion (indicating that the preamble sequence is repeated after every L OFDM symbols).

For example, in 5G NR, 13 types of preamble formats are supported called Format 0, Format 1, Format 2, Format 3, Format A1, Format A2, Format A3, Format B1, Format B2, Format B3, Format B4, Format C0, and Format C1. These 13 types of preamble format are grouped in the two categories:

- long Preamble;
- short Preamble.

The long PRACH preambles are associated with the 4 different formats 0,1,2,3 whereas the short PRACH preambles are associated with the 9 formats A1, A2, A3, B1, B2, B3, B4, C0, C2.

Differences in the time domain of different preamble formats include different CP length, Sequence Length, GP length and/or number of repetitions.

Short preamble formats of types A and B are identical except that B formats have shorter cyclic prefix.

In some applications of the disclosure (for example in 5G NR), mixed formats mixing formats A" and "B" may be used such as for example A1/B1, or A2/B2.

Short preambles may be particularly suitable for indoor deployment scenarios and small/medium cells.

For short PRACH preambles, there may be multiple RACH occasions (RO) in the frequency domain and in the time domain within a single RACH slot.

According to embodiments of the disclosure, the Auxiliary information AUX_INFO may be encoded through the RO occasions.

For example for short preambles, PUSCH configuration information may be encoded through the ROs (RACH occasions) of short formats, which are configured within a slot.

The following description of some embodiments of the disclosure will be made with reference to such embodiments in which Auxiliary information AUX_INFO is encoded through the RO occasions of short formats, for illustration purpose only and to facilitate the understanding of the following embodiments of the invention. However, the invention similarly applies to long preamble formats.

A short PRACH preamble occupies K resource blocks in the frequency domain (K=12 in 5NR).

Short preambles formats may be designed such that the last part of each OFDM symbol acts as a CP for the next OFDM symbol. Further, the length of a preamble OFDM symbol may be equal to the length of data OFDM symbols.

Each short PRACH preamble may comprise multiple shorter OFDM symbols.

With the use of short PRACH preambles, a same PRACH preamble may be received with different beams at the base station (e.g. gNB) 2.

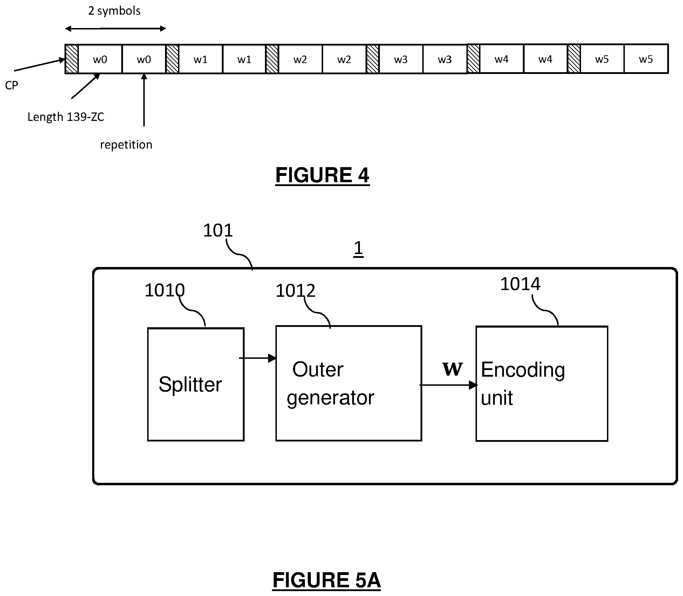

Figure 4 shows an example of PRACH format A1 with a horizontal code.

As shown in the example of figure 4, format A1 is configured with 6 PRACH occasions, each corresponding to 2 symbols $w_i$.

Figure 5A is a diagram schematically representing a User Equipment 1 according to some embodiments.

As shown in Figure 5A, the User equipment 1 comprises an encoder 101 configured to encode the auxiliary information AUX_INFO onto the PRACH occasions.

The encoder 101 may comprises a codeword generator 1012 configured to select a codeword $w_m = [w_{m0}, w_{m1}, ... , w_{mN-1}]$ for message m from a code $W = \{w_0, w_1, ... , w_{M-1}\}$ where m is the auxiliary information, $N$ is the number of PRACH occasions, $m$ is the message index, $m = 0,1, ..., 2^{B-1}$, $w_{mn}$, $n = 0,1, ..., N - 1$ is a complex number, $M = 2^B$ and $B$ is the number of bits of the message $m$.

In some cases, in particular in the context of small data transmission (SDT), user data comprising D bits can be transmitted in the PUSCH transmission of the RACH message, for example msgA of the 2-step RACH procedure, where the message transmission (e.g. msgA) comprises a preamble transmission and a PUSCH transmission. The preamble consists of at most K different sequences. In a 3GPP application, the preamble consists of at most 64 different sequences, i.e. B = 6 bits.

In such application, the invention enables using a preamble that can encode B>6 bits.

According to the embodiments of the invention, the B bits of information can be utilized to encode:

- user identification;
- control information for the subsequent PUSCH transmission;
- user data.

If all of the user data D can be encoded in the preamble, i.e. D≤B, a subsequent PUSCH transmission is not necessary and only the enhanced preamble is transmitted (ie. the transmission is self-contained).

If D>B, part of the data D can be transmitted in the (enhanced) preamble. The number of user data bits D may be defined by D = Dp + Du, where Dp are the bits transmitted in the preamble (Dp<=B) and Du are the bits transmitted in the PUSCH. Advantageously, the bits Dp enjoy higher error protection than the Du bits.

In some embodiments, the encoding unit 101 may also comprise a splitter 1010 configured to split the B channel bits into the two components using a set of splitting parameters. The two components include a first component BV (vertical component) comprising $B_v$ bits which are encoded in a vertical domain (e.g. frequency) and a second component BH (horizontal component) comprising $B_h$ bits encoded in a horizontal domain (e.g. time), where B = $B_v$ + $B_h$. The vertical bits $B_v$ are such that $2^{B_v}$ = K total number of available preambles used. B therefore corresponds to the number of total bits in vertical and horizontal domains.

The vertical bits $B_v$ correspond to the preamble c while the horizontal bits correspond to the auxiliary information bits and are used to generate the outer code.

The partition of the B channel bits enables providing two levels of error protection as the decoding process for the $B_v$ bits has a lower error probability than the decoding process of the $B_h$ bits.

To facilitate the understanding of the disclosure, the following description of some embodiments of the disclosure will be made with an application of the disclosure to the 3GPP network, for illustration purpose. Therefore, it will be considered that $B_v$ = 6, which corresponds to the legacy $2^6$ = 64 preambles (K=64) used which are defined in the 3GPP standard. However, the skilled person will readily understand that the disclosure is not limited to $B_v$ = 6 and encompasses any value of $B_v$. In particular, the preamble sequences may be augmented/extended to encode more information in frequency domain, such that $B_v$ > 6.

The horizontal code BH, also referred to as the 'outer code' hereinafter, may be either orthogonal or non-orthogonal depending on the number of PRACH occasions N.

The outer code generator 1012 corresponds to an horizontal code generator configured to generate a horizontal code W (referred to as the 'outer code') from the second component of $B_h$ bits and a vertical code generator 1013 configured to generate a vertical code from the first component of $B_v$ bits.

The UE 1 comprises one or more modulators adapted to apply a single carrier or multi-carrier modulation to the sequences transmitted from the UE1 to the base station 2, which provide modulation symbols grouped into resource blocks, each resource block comprising resource elements. The vertical code corresponds to a vertical dimension representing the resource elements (for example frequency dimension) and the horizontal code corresponds to a horizontal dimension representing time dimension or modulation symbols.

The vertical code generator 1013 is configured to map the $B_v$ bits into the vertical code corresponding to the preamble $v$.

The horizontal code (outer code) generator 1012 is configured to map the $B_h$ bits of into the horizontal code (outer code) corresponding to the encoded auxiliary information.

The vertical code generator 1013 may be configured to generate the vertical code $r_v$ as a Zadoff-Chu sequence (for example length-139 Zadoff-Chu sequence) for the preamble v transmitted in all PRACH occasions.

The outer code generator 1012 configured to generate the outer code W depending on a condition related to the $B_h$ bits.

The encoding unit 101 may further comprise a combiner 1014 configured to combine the vertical code $r_v$, provided by the vertical code generator 1013, with the horizontal code *W* provided by the outer code generator 1012, in the PRACH occasion *n*, which provides a combined code sequence corresponding to the encoded Auxiliary information AUX_INFO.

The code $r_v$ represents the coded sequence transmitted in the frequency domain. At least a part of the code $r_v$ may correspond to the PRACH preamble.

The combined code sequence may be determined by combining the vertical code $r_v$ corresponding to the preamble and the horizontal code W corresponding to the auxiliary information.

In particular, in one embodiment, the combined code sequence may be the product of the vertical code $r_v$ and of the horizontal code W.

In one embodiment, the combiner 1014 may determine the encoded auxiliary information m as the sequence $\bar{r}_{vm}(n)$ transmitted in PRACH occasion n defined according to Equation (1):

$$\bar{r}_{vm}(n) = r_v w_{mn} \ (1)$$

In Equation (1), $w_m$, is the $n^{th}$ entry (or component) of codeword $w_m$, $r_v$ denotes the Zadoff-Chu sequence (for example length-139 Zadoff-Chu sequence) for preamble v transmitted in all PRACH occasions which constitutes the vertical code, and $\bar{r}_{vm}(n)$ designates the sequence transmitted in PRACH occasion *n* corresponding to message *m*.

Alternatively, the combined sequence $r_v$ may be the product of the vertical code $r_v$, of a phasor term, and of the horizontal code W.

In one embodiment, the phasor term may be equal to $e^{j\beta kmod2}$.

In such embodiment, the sequence $\bar{r}_{vm}(n)$ transmitted in PRACH occasion n is defined according to Equation (2):

$$\bar{r}_{vm}(n) = r_v e^{j\beta kmod2} w_{mn} \ (2)$$

k is the kth element of vector $r_v$ In Equation (2), $\beta$ may be chosen to minimize the Peak-to-Average Power Ratio (PAPR) and depends on the modulation chosen for the vertical code. For example for a QPSK modulation, $\beta = \pi/4$. This ensures that the "even" dimensions are the original constellation and the "odd" dimensions be rotated. This further ensures that the trajectory between the two dimensions (in time) can never cross the origin. The phasor $e^{j\beta kmod2}$ enables avoiding zero-crossings.

It should be noted that in some embodiments, the phasor term can be omitted. The phasor term may be used in embodiments where it is needed to limit peak-to-average power ratio when applied on the time-domain signal.

In some embodiments, the condition related to the $B_h$ bits is a comparison between $B_h$ and $\log_2 N$. Depending on this condition, the outer code generator 1012 is configured to determine the outer code W.

The condition related to the $B_h$ bits may consist in comparing whether $B_h$ is inferior or equal to $\log_2 N$.

In such embodiment, if $B_h \leq \log_2 N$, an orthogonal encoding scheme may be used by the outer code generator 1012 to generate the outer code W from the horizontal component (horizontal bits $B_h$).

The orthogonal encoding scheme may consist in determining the outer code W as the discrete Fourier transform (DFT) matrix of size N, and the codewords $w_m$ may be the rows or columns of W, such that m = 0,1,..., $2^{Bh-1}$.

Alternatively, if $B_h > \log_2 N$, the outer code (and the codewords $w_m$) may be generated using a non-coherent linear code.

In some embodiments, the non-coherent code W = {$w_0$, $w_1$, ..., $w_{M-1}$} may be a non-coherent code generated with a generator matrix G according to patent application EP 20305929.

In such embodiment, the outer code *W* may be chosen as a codeword $\lfloor m2^{-B_v} \rfloor$ from a ($N,B_h$) linear error correcting code, having a length N and a rank ($B_h$), the linear error correcting code being represented by a generator matrix $G(B_h, N)$ given in a systematic form:

$$G(B_h, N) = (I_N \quad G_{N \times (B_h)-N}) \ (3)$$

In Equation (3), $I_N$ designates the identity matrix of dimensions $N \times N$ and $G_{N \times Bh\text{-}N}$ designates a rectangular matrix comprising $N$ lines or row vectors and $B_h$ - $N$ columns or column vectors. The linear error correcting code may be generated for example as described in EP application N°20305929.0.

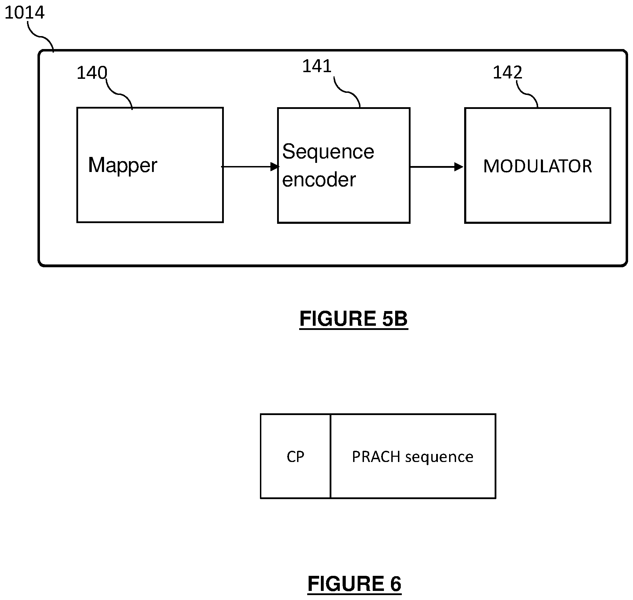

Figure 5B is a block diagram representing the outer code generator 1014 according to an embodiment in which the outer code is generated as an outer code using the generator matrix $G(B_h,N)$.

In such embodiment, the outer code generator 1014 may be configured to map the message $m$ to a given base $E$ ($m$ is mapped to $d$ in the base), using a mapper 140, such as for example and without limitation a base 4. For example if $B_h = 4$, the mapping may map $m$ to $d$ as follows:

$$m = 7 = [0\ 1\ 1\ 1] => [1\ 3] = d$$

$d$ will be referred hereinafter as the 'mapped message' in $E$.

The outer code generator 1014 may be further configured to determine an encoded sequence $c$ by encoding the mapped message $d$ using a generator matrix $G$ such that $c = dG$, using a sequence encoder 142.

The outer code generator 1014 may be further configured to modulate the encoded sequence $c$ to obtain complex symbols $w_{mn}$ using a modulator 144. In one exemplary embodiment, the modulation according to Equation (4) may be applied to determine $w_{mn}$:

$$w_{mn} = e^{i2\pi c_n/4} \quad (4)$$

$w_{mn}$ is the $n^{th}$ entry of codeword $w_m$ and $c_n$ is the $n^{th}$ component of the encoded sequence $c$.

This provides a non-coherent linear code $W$.

For example, the generator matrix $G$ may be equal to:

$$G = \begin{bmatrix} 1 & 0 & 2 & 3 & 3 & 3 \\ 0 & 1 & 1 & 1 & 2 & 3 \end{bmatrix}^{P \times N}$$

The above exemplary generator matrix G, also noted G(4,12) is written in base-4, takes 4 input bits and generates 12 coded bits. The 12 coded bits are modulated to obtain 6 complex symbols.

The encoder 101 may encode the auxiliary information AUX_INFO with the outer code W applied on top of PRACH occasions $n$, in any PRACH format configurable with a number of PRACH occasions per slot.

In some embodiments, the PRACH format may be any short preamble PRACH format, except the PRACH Format B4, which consists of 12 repetitions, all the short preamble PRACH formats, except PRACH format B4, being configured with different a number of PRACH occasions per slot.

In one embodiment, the PRACH format may by a novel PRACH format referred to hereinafter as "PRACH format AC", configured to maximize the amount of information bits that can potentially be additionally transmitted.

The PRACH format A0 according to this embodiment comprise is deprived of sequence repetitions.

Figure 6 depicts a PRACH format A0 without repetition that can be used for the PRACH preamble while enabling encoding of the auxiliary information AUX_INFO by applying the outer code W on top of the PRACH occasion, according to an embodiment.

Depending on the length of CP, the PRACH format A0 has a duration of one OFDM symbol or a non-integer number of ODFM symbols.

The PRACH format A0 is associated with a CP length, a total sequence length and a total duration.

The following table 'Table 1' provides features of a PRACH format A0, with a sample time Ts, in terms of CP length, sequence length and total duration:

Table 1

| Format | CP Length | Sequence Length | Total Duration |
|--------|-----------|-----------------|----------------|
| A0 | $144T_S \cdot 2^{-\mu}$ | $2048T_S \cdot 2^{-\mu}$ | 1 symbol |

Such format A0 may be the default symbol configuration for normal cyclic prefix length. The format A0 may not use a guard period (which refers to an unused portion of time up to the end of the last subframe occupied by the PRACH) so that the propagation delay is assumed small to limit interference or the UE to estimate the timing advance from DL (Downlink) signals and adjusts the transmission time.

All formats A0 may be combined (or mixed) with the conventional PRACH formats A1, A2, A3, B1, B2, B3, B4, C0, C2.

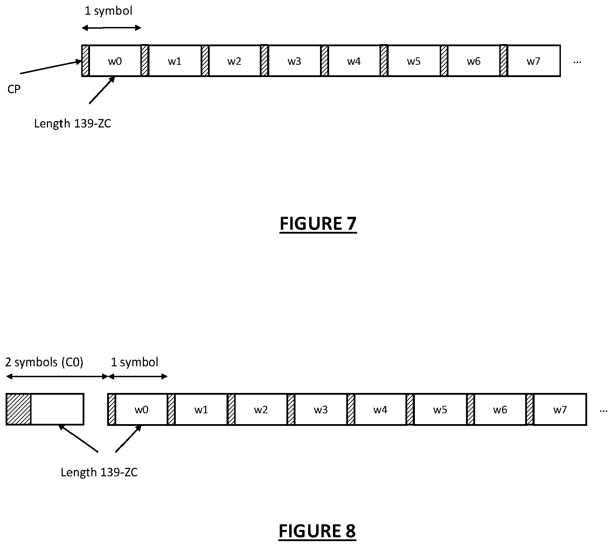

Figure 7 depicts an exemplary PRACH format A0 without repetition, with configurable PRACH occasions per slots. The exemplary configuration of Format A0 of figure 7 comprises 8 POs (PRACH Occasions).

Figure 8 shows a mixed configuration with a conventional PRACH format C0 and novel PRACH format A0. Such mixed configuration allows the base station gNB 2 to estimate a relatively large propagation delay from the format C0 and can adjust the receive (FFT) window for the subsequent reception of format A0 with minimal interference.

The application of the outer code W on the PRACH transmission occasions according to the embodiments of the disclosure enables an enhanced PRACH transmission scheme.

Such enhanced PRACH scheme may be configured in a TDM-fashion (TDM stands for Time Division Multiplexing), the enhanced PRACH transmission occasions (POs) being then subsequent in time domain as opposed to FDM (FDM stands for Frequency Division Multiplexing).

The decoding of the outer code W may be performed at the base station 2 to access the auxiliary information AUX_INFO. The decoding of the outer code may be performed if all associated ROs (RACH Occasions) are transmitted via the same beam.

The auxiliary information may comprise parameters which are needed to decode the PUSCH (such as time-frequency allocation, MCS, etc).

The base station 2 may comprise a receiving unit configured to receive the signal transmitted by the User Equipment and decode the received signal to recover the original data.

It should be noted that the base station 2 implements a reverse processing of the processing implemented in transmission.

In one embodiment, the receiving unit of the base station 2 may apply a two-step processing which comprise first decoding the smaller of *BH* or *BV* by non-coherently combining the L received symbols or non-coherently combining the $\alpha$P resource elements (with $\alpha$ representing the number of modulation carriers per resource block and *P* represents the minimal number of physical resource blocks, and the number L corresponding to the time-window over which the message is encoded). This enables significantly reducing computational complexity, especially in the case of the larger payload sizes.

A general case of the detection problem defined by equation (5) is considered:

$$y_{l,p} = H_{l,p}\bar{r}_{vm} + z_{l,p}, l = 0, \dots, L - 1 \quad (5)$$

In Equation (5), $y_{l,p}$ denotes the signal received at the base station 2, $H_{l,p}$ is defined by $H_{l,p} = \text{diag}(H_{l,k,p})$ where $H_{l,k,p}$ is the complex channel response for OFDM symbol 1 and subcarrier k on antenna port *p*.

In one embodiment, the receiving unit of the base station 2 may be a near-optimal receiver for a completely unknown channel realization configured to determine an estimate $\hat{m}$ of the original message m by solving the optimization problem defined by:

$$\hat{m} = \text{argmax}_m \sum_{p=0}^{P-1} \left| \sum_{l=0}^{L-1} y_{l,p} \bar{r}_{vm}^H \right|^2 \quad (6)$$

In some embodiments, $\hat{m}$ may be defined from $\hat{m}_V$ and $\hat{m}_H$. In one embodiment, $\hat{m}$ may be defined as:

$$\hat{m} = \hat{m}_V + \hat{m}_H 2^{BV} \quad (7)$$

Alternatively, the receiving unit of the base station 2 may be a low-complexity receiver which first detects the BV bits (first detection step) and then separately detects the remaining BH bits (second detection step).

For example, considering if BV ≤ BH, the receiving unit of the base station 2 may comprise a detector for detecting the first BV bits (in the first detection step) defined by determining an estimation $\hat{m}_V$ of the BV bits of the original message m:

$$\hat{m}_V = \text{argmax}_{m_V=0,1,\dots,2^{Bv}-1} \sum_{p=0}^{P-1} \sum_{l=0}^{L-1} \left| y_{l,p} \bar{r}_v^H(m(m_V, m_H^*)) \right|^2 \quad (8)$$

In equation (8), $m_H^*$ and 1* are arbitrary. The remaining $B_H$ bits of the original message *m* (in the second detection step) may be chosen as:

$$\widehat{m}_H = \mathrm{argmax}_{m_H=0,1,\ldots,2^{B_h}-1} \sum_{p=0}^{P-1}\left|\sum_{l=0}^{L-1} y_{l,p}\,\overline{r}_v^H(m(\widehat{m}_V,m_H))\right|^2 \qquad (9)$$

Assuming that $\widehat{m}$ is defined according to equation (7), from a complexity standpoint, in the first step of the detection, the number of complex multiplications may be $12P2^{B_v}LK$, while in the second step of the detection, the number of complex multiplications may be $12P2^{B_h}LK$. For example, the total of complex multiplications for P = 1, K = 1, L = 14, $B_v$ = 12, $B_h$ = 10 is equal to 860160 complex multiplications.

In comparison, a full receiver defined by equation (6) would require 704643072 complex multiplications. Performance may be still increased by integrating a list of several hypotheses in addition to the one corresponding to the maximum defined by equation (6) at the expense of increasing the second term governing the complexity. For example, with two hypotheses, the total complexity would rise to 1720320 complex multiplications.

During the synchronisation phase, the sync signal (SSB) is associated with different beams and the UE 1 selects a given beam and sends the PRACH preamble using that beam.

In order for the network to determine the beam selected by the UE 1, a particular mapping between the sync signal (SSB) and a RACH Occasion (RO) may be used. This enables determining which RO the UE 1 sends the PRACH to, and thereby which SSB Beam that UE has selected.

According to conventional 3GPP systems, the mapping between SSB beams and RACH Occasion is defined by two RRC parameters:

- a first RRC parameter referred to as "msgA-FDM";
- a second RRC parameter used to configure the ROs per beam, and referred to as "ssb-perRACH-OccasionAndCB-PreamblesPerSSB" for 4-step RACH or "msgA-SSBPerRACH-OccasionAndCB-PreamblesPerSSB" for 2-step RACH.

The first RRC parameter (msgA-FDM) indicates how many ROs are allocated in frequency domain at the same location in the time domain (number of PRACH transmission occasions FDMed in one time instance).

The second RRC parameter (ssb-perRACH-OccasionAndCB-PreamblesPerSSB or msgA-SSBPerRACH-OccasionAndCB-PreamblesPerSSB) indicates how many SSB can be mapped to one RO and how many preamble indexes can be mapped to a single SSB. The second RRC parameter thereby defines how many beams share one RO (e.g. eight = 8 beams per RO) or how many ROs there are per beam (e.g. oneEighth = 8 ROs per beam). Moreover, the second RRC parameter may be used to define how many preambles there are per beam, e.g. oneEighth = 8 ROs per beam with up to 8 preambles per beam.

According to some embodiments of the disclosure, the enhanced PRACH transmission scheme may be configured to transmit multiple ROs (more than two ROs) on the same beam.

Advantageously, the mapping between SSB beams and RACH Occasion may be defined by an additional RRC parameter (referred to hereinafter as "third RRC parameter" or "numRO-enhancedPRACH-perSSB") specifying the number of time-consecutive ROs for transmission of the enhanced PRACH (PRACH preamble including the outer code overlaid onto the PRACH occasions to encode PUSCH configuration information) per SSB.

The third RRC parameter may take any integer value up to the total number of consecutive ROs per SSB and thereby defines the number of ROs for enhanced PRACH per SSB.

In one embodiment, a number of PRACH preambles per SSB may be reserved for the transmission of enhanced PRACH via a fourth RRC parameter (also referred to as "numPreamblesEnhPrachPerSSB". The fourth RRC parameter thereby specifies the number of reserved preambles per SSB for the use of enhanced PRACH scheme according to the embodiments of the disclosure (the other preambles out of the K preambles, e.g. K=64, being used for conventional PRACH transmission).

In some embodiments, the enhanced PRACH scheme may be configured so that not all PRACH slots are available for enhanced PRACH transmission (for example every k slots) within the PRACH configuration period. This enables a separate configuration of slots for enhanced PRACH.

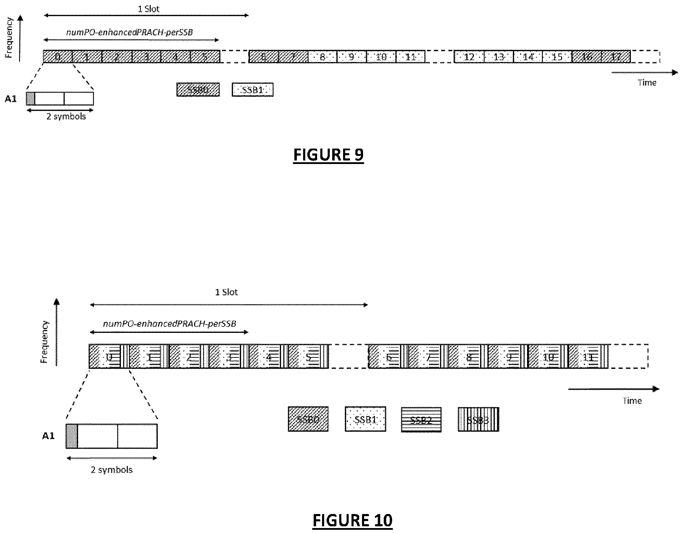

Figure 9 shows an exemplary RACH configuration in spectrum range FR1 (Frequency range 1), where one beam SSB is associated with 8 ROs and where all K preambles (e.g. K=64) are available per RO. The example of figure 9 corresponds to 2 SSBs (SBB0 and 1), a first RRC parameter msg1-fdm=one, a second RRC parameter ssb-perRACH-OccasionAndCB-PreamblesPerSSB=oneEighth, 64 available preambles, and a third RRC parameter numRO-enhancedPRACH-perSSB=6. In the example of figure 9, SBB0 is associated with ROs 0 to 7, and SSB1 is associated with ROs 8 to 15.

In the example of figure 9, the fourth RRC parameter numPreamblesEnhPrachPerSSB may be configured between 1 ...64. For example, a value of the fourth RRC parameter numPreamblesEnhPrachPerSSB equal to 16 means the first 16 preambles per SSB are used for enhanced PRACH and the other 48 for normal PRACH transmission.

Figure 10 depicts a RACH configuration in FR1 (sub-6 GHz) with 4 beams SSBs (SSBO, SSB1, SSB2, and SSB3). The 4 beams share one RO in the preamble domain, i.e. each beam is associated with 16 preambles.

The RACH configuration of figure 10 corresponds to a first RRC parameter msg1-fdm=1, and a second RRC parameter ssb-perRACH-OccasionAndCB-PreamblesPerSSB = 4.

The UE 1 transmits the preamble associated to the strongest beam in a valid RACH occasions. In figure 10, the third RRC parameter numRO-enhancedPRACH-perSSB = 4 but could take alternatively any integer value until the end of ROs of the RACH configuration period, such as for example 8, 16, 32, etc. The crossing of slot boundaries does not impact the performances as long as the channel remains coherent.

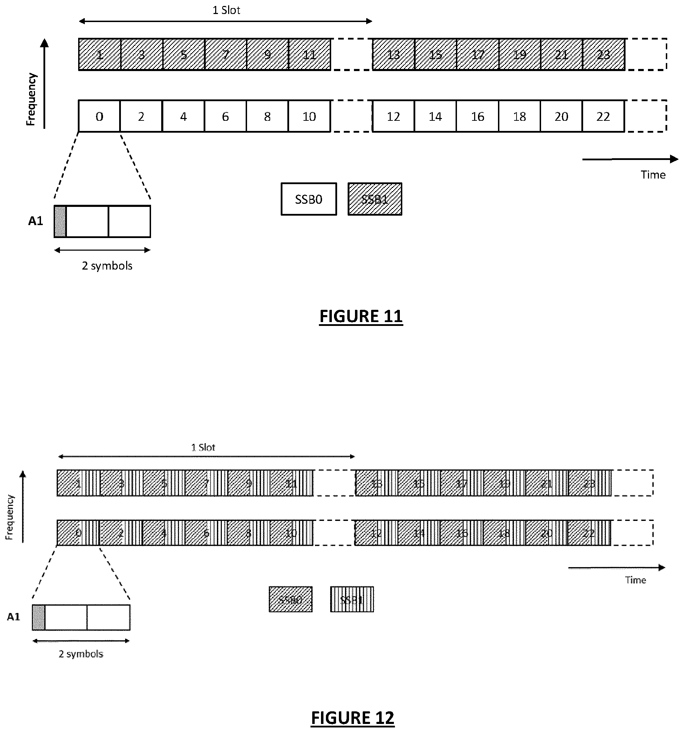

In some embodiments, the outer code may be applied to time-consecutive ROs per frequency resource per SSB, as represented in figure 11.

Figure 11 represents another exemplary RACH configuration in which the ROs are frequency multiplexed with two frequency locations and 2 beams SSB0 and SSB1 are used. In the example of Figure 11, one SSB per RO is used and all the 64 preambles available in the RO are configured for one SSB. The first RRC parameter msg1-fdm is equal to 2 (msg1-fdm=2), the second RRC parameter ssb-perRACH-OccasionAndCB-PreamblesPerSSB is equal to 1 (ssb-perRACH-OccasionAndCB-PreamblesPerSSB = one) and the number of available preambles is equal to 64 (K=64)

In the example of Figure 11, the outer code is applied to time-consecutive ROs per frequency resource per SSB. Therefore, the UE 1 selects a preamble out of the 64 available preamble and transmits the selected preamble, for example on RO 1,2,6,7,9,11 for SSB1.

In some embodiments, the outer code W may be applied such that:

- the same signal is transmitted on the RACH frequency resources, i.e. the outer code W is only applied on consecutive ROs in time and repeated in frequency domain;
- a permutation of the outer code input bits could be transmitted; and
- the signal is only transmitted on a single frequency resource.

This is illustrated for example by figure 12 which represents another example of a RACH configuration, in which 32 preambles are allocated per SSB and using 2 beams SSB0 and SSB1 sharing the same RO. In the example of Figure 12, the first RRC parameter msg1-fdm is equal to 2 (msg1-fdm=2), the second RRC parameter ssb-perRACH-OccasionAndCB-PreamblesPerSSB is equal to 2 (ssb-perRACH-OccasionAndCB-PreamblesPerSSB = 2) and the total number of available preambles is equal to 32 (K=32)

The potential transmissions on different frequency resources may be non-coherently combined that the receiver to increase the decoding probability.

In the embodiments using Frequency Division Multiplexing (FDM) (*FDM of the ROs configured by parameter msg1-fdm),* the enhanced PRACH signal may be repeated on the available frequency resources.

Further, in FDM embodiments, the enhance PRACH signal may be transmitted only on a single frequency resource, which may be pre-configured, specified or chosen randomly by the UE 1.

In some embodiments using FDM, the enhanced PRACH signal may be transmitted on all frequency resource, with a different encoding (such as a permutation of the input sequence to the encoder) on each resource.

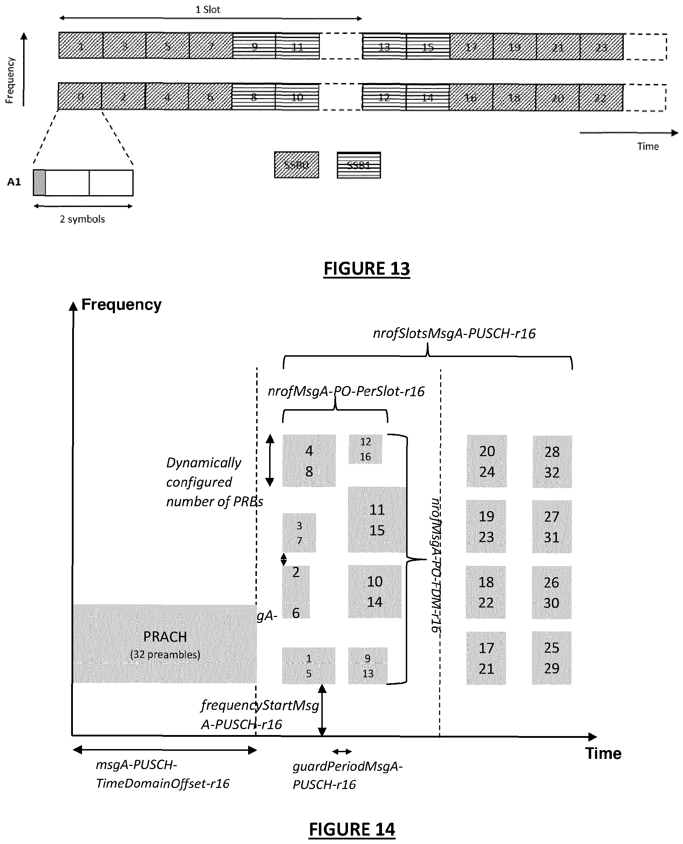

Figure 13 represents another exemplary RACH configuration using two beams SSB0 and SSB1, one of the two beams (SSBO, SSB1) being associated to 8 ROs in a FDM setting. In the example of Figure 13, the first RRC parameter msg1-fdm is equal to 2 (msg1-fdm=2), the second RRC parameter ssb-perRACH-OccasionAndCB-PreamblesPerSSB is equal to oneEighth (ssb-perRACH-OccasionAndCB-PreamblesPerSSB = oneEighth) and the number of available preambles is equal to 64 (K=64). Similarly to Figure 12, the enhanced PRACH is transmitted on one frequency resource but there are less consecutive ROs available compared to the non-FDM case of figure 9.

It should be noted that the description of the embodiments represented in figures 9 to 13 has been made with reference to PRACH Format A1 for illustration purpose only. The skilled person will readily understand that the embodiments of the disclosure are not limited to PRACH Format A1 and apply similarly to any PRACH format including the PRACH format A0 or a mixed format base on format A0.

In some embodiments, the auxiliary information AUX_INFO encoded on the PRACH Occasions, using the outer code W, may be used to adapt the PUSCH transmission parameters.

In particular, in one embodiment, the auxiliary information AUX_INFO may be used to control the parameters of the subsequent associated PUSCH transmission. Although the base station (gNB 2) may still semi-statically configure the start positions and global parameters of the PUSCH occasions, the PUSCH transmission parameters may be advantageously signaled by the UE 1.

Figure 14 shows a time/frequency diagram showing an example of PRACH and MsgA PUSCH resource allocation with dynamically configurable PUSCH transmission parameters, using the encoded auxiliary information AUX_INFO, in which the start position is configured semi-statically while the exact time-frequency allocation is dynamically chosen by the UE.

It should be noted that POs with different DMRS (Demodulation Reference Signal) configuration (for example 2 and 6) can have different PUSCH transmission parameters so that their time-frequency resources may only partially overlap. The overall DMRS configuration, comprising a definition of the configuration type, of the single/double symbols, of the CDM groups (CDM stands for Code Division Mulitplexing) and/or of the number of ports may also be configured semi-statically. For example, the UE 1 may dynamically adapt the number of DMRS symbols to improve PUSCH decoding depending on the channel conditions, using the auxiliary information AUX_INFO.

In some embodiments, the auxiliary information AUX_INFO encoded via the outer code in the enhanced PRACH may be used to control at least one PUSCH transmission parameters among a MCS parameter, a Time-frequency resources parameter, a PUSCH Mapping Type parameter, a DMRS configuration parameter, a RV parameter, and Repetition parameter.

The MCS parameter (MCS stands for Modulation and Coding Scheme) defines the numbers of useful bits which can carried by one symbol. In 5G NR, a symbol is defined as Resource Element (RE) and MCS defined as how many useful bits can be transmitted per Resource Element (RE); A MCS basically defines the following the Modulation and the Code rate. Therefore, different MCS values modify coding rate and the modulation scheme.

The Time-frequency resources parameter designates the number of available resources for transmission, that is the number of modulation symbols (e.g. OFDM symbols) and number of physical resource blocks (PRBs).

The PUSCH Mapping Type parameter refers to the mapping type for PUSCH resources.

The DMRS configuration parameter refers to the Number of additional positions.

The RV parameter refers to a redundancy version.

The Repetition parameter refers to repeated transmissions. The UE 1 can transmit on multiple consecutive POs, if payload is larger or a ultra-reliable transmission. However, additional transmissions may lead to contention. The base station gNB 2 may then allocate specific preambles for this type of transmission corresponding to repetitions.

In some embodiments, the PUSCH transmission parameters controlled by the encoded auxiliary information AUX_INFO may be stored in at least one data structure (also referred to as 'configuration data structure') comprising entries, each corresponding to an index, such as a table.

The index to the data structure entry may be signaled (i.e specified or comprised) in the auxiliary information AUX_INFO of the PRACH preamble.

An index of the data structure may therefore be associated with an entry comprising the different PUSCH transmission parameters controlled by the auxiliary information AUX_INFO encoded with the outer code.

The following table 'Table 2' is an example of such data structure, the index used in the auxiliary information AUX_INFO corresponding to the row index indicated in the first column. In this example, 3 bits may be used to signal a row, corresponding to the PUSCH transmission parameters.

Table 2

| Row Index | MCS | PUSCH Mapping Type | S | L | Number of PRBs | DMRS Additional Position |
|-----------|-----|--------------------|---|---|----------------|--------------------------|
| 0 | 0 | Type A | 0 | 14 | 12 | pos3 |
| 1 | 9 | Type A | 0 | 12 | 8 | pos2 |
| 2 | 12 | Type A | 0 | 10 | 4 | pos2 |
| 3 | 16 | Type A | 0 | 14 | 2 | pos1 |
| 4 | 6 | Type B | 2 | 10 | 10 | pos2 |
| 5 | 11 | Type B | 4 | 8 | 16 | pos1 |
| 6 | 13 | Type B | 4 | 6 | 18 | pos0 |
| 7 | 9 | Type B | 8 | 6 | 8 | pos1 |

The use of the auxiliary information AUX_INFO thereby enables dynamic signaling of the PUSCH transmission parameters.

A PRACH time-frequency resource refers to a PRACH occasion and corresponds to a time-frequency resource unit used to send the random access preamble.

A PUSCH time-frequency resource refers to a PUSCH occasion (PO) and corresponds to a time-frequency resource unit used to send the PUSCH transmission.

A PRACH slot includes a PRACH time-frequency resource.

A guard band may be used to avoid overlap on the base station (2) side, between msgA PUSCH transmissions, in consecutive PUSCH occasions, according to a guard period. A guard band parameter ('guardBandMsgA-PUSCH-r16') and a guard period parameter ('guardPeriodMsgA-PUSCH-r16') are configured to define the guard band and the guard period.

The size of the configuration data structure may be limited by the number of bits encoded over the ROs. Therefore, in some embodiments, multiple smaller data structures may be used instead of only one big configuration data structure.

Further, in some embodiments, the time-frequency resources may be chosen such that the configured guard band (guardBandMsgA-PUSCH-r16) and guard period (guardPeriodMsgA-PUSCH-r16) are not exceeded. Advantageously, in such embodiments, the configuration data structures may comprise a plurality of configuration data structures (for example tables) with specified values and an additional data structure semi-statically configured along with the PUSCH resource configuration for MsgA.

Each configuration data structure may correspond to different types of use cases. For example, one configuration data structure may be adapted for reliable transmission with low MCS values and another configuration data structure may be adapted for high data rates with larger MCS and larger resource allocations.

In some embodiments, PUSCH repetition may be configured using the enhanced PRACH signal, by specifying the repetition mode in the auxiliary information AUX_INFO. A repetition mode bit may be for example used to specify the repetition mode, the repetition mode bit having a first value indicating that PUSCH transmission repetitions will be used and a second value indication that no PUSCH transmission repetition will be used.

In Ultra-Reliable Low-Latency Communication (URLLC) applications of the disclosure, to transmit URLLC packets, a single PUSCH transmission may not be sufficient to satisfy the reliability requirements. Hence, the UE 1 may indicate in the PRACH preamble that it will use multiple POs to transmit its packet repeatedly. For instance, as shown in the example of figure 14, a UE 1 may choose the preamble 1 to transmit on PO 1. In the auxiliary information AUX_INFO, the UE1 may further indicate the PUSCH configuration by specifying the data structure index (e.g. 3 bits for Table 2), and specifying the repetition mode, using for example one bit value indicating that the UE 1 will use repetition. For example, the UE 1 may transmit on PO 1, 9, 17 and 25.

A number of PUSCH transmission parameters may be the same for all associated POs. Alternatively, some particular PUSCH transmission parameters may be different for all associated POs. For example, the RV parameter is different for each transmission. The RV for the repetitions may be pre-configured or specified directly (e.g. 0,1,2,3 for 4 repetitions).

In some embodiments, only a subset of POs among all the POs may be configured for PUSCH repetitions using a configuration of associated preambles (in such embodiment, the subset of POs comprises a number of POs inferior to the total number of POs).

In one embodiment, the base station 2 (e.g. gNB) may be adapted to configure the associated preambles by selecting a particular subset of preambles that are allowed for repetitions, which thereby determines the subset of POs which comprises the POs associated with the selected subset of preambles. For example, in Figure 14, preambles 1-8 are configured for use of 4 repetitions.

In some embodiments, the auxiliary information AUX_INFO encoded with the outer code on the POs may be used to extend the PRACH preamble capacity.

In one embodiment, the auxiliary information AUX_INFO may comprise a number of extensions bits configured to extend the PRACH preamble capacity, the number of bits being chosen to increase the cell size (size of the cell defined by the base station 2) while maintaining a reasonable root-sequence reuse pattern. If the auxiliary information AUX_INFO comprises T bits (for example T= 4), the preamble capacity may be thereby increased from $2^{B_h}$ = K to $2^{B_h+T}$ (for example from $2^6$ = 64 to $2^{10}$= 1024 if $B_h$=6, K=64 and T=4).

There are only a limited number of PRACH sequences available depending on the root of the ZC-sequence and the cyclic shift. This pool of PRACH sequences may be shared by all the cells. This may create a lot of interference if neighboring cells use the same PRACH sequences, especially if the cell size is small. A root-sequence reuse pattern defines how many different PRACH preambles can be configured before the roots are exhausted and have to be reused. For example, if a large cyclic shift is configured, then only a single PRACH sequence per root is available. If 64 PRACH sequences are further configured per cell, one cell may exhausts already 64 roots. For length 139 sequences, there are only 138 roots. Hence after 2 cells, the third cell may need to use some of the same sequences as cells 1 and 2, given the same PRACH configuration is used.

It should noted that such preamble additional capacity does not impact the cell size since the auxiliary information AUX_INFO does not modify the underlying PRACH sequence. For instance, considering a Zero Correlation Zone Configuration of 0, which means that there is only a single sequence per root, and that the cell size is about 10km, only 128 PRACH sequences are available and the root-sequence reuse pattern is 2, which is a challenge for a network configuration. By applying an outer code of non-coherent type (e.g. a (4,6)-code) in time domain on the PRACH sequence, according to some embodiments, the capacity may be increased by a factor 16 so that the root-sequence reuse pattern is 32, which is much more amenable to network planning.

In some embodiments, the auxiliary information AUX_INFO may be used to include information about the type of Transmission in the outer code. In one embodiment a transmission type bit may be used in the auxiliary information AUX_INFO to specify if the transmission type is an SDT transmission or not. The transmission type bit may have a first value indicating that the transmission type is an SDT transmission and a second value indicating that the transmission type is not a SDT transmission.

This obviates the need from using prior art preamble partitioning that is conventionally used for MsgA transmission in the context of SDT, the preamble partoning consisting in setting aside a certain number of dedicated preambles among the set of K available preambles to indicate SDT, so that if the UE 1 sends MsgA using the dedicated preambles, the base station 2 (gNB) identifies that this is a SDT transmission.

By signaling the transmission type in the outer code W, according to the embodiments of the disclosure, using one bit will indicate if the transmission is SDT or not, dedicated preambles are not needed to be reserved to indicate SDT transmission.

Additionally or alternatively, the auxiliary information AUX_INFO may comprise one or more transmission indicators related to the message transmission among:

- a Transmission cause indicator;
- a Priority indicator which indicates the priority of the transmission based on a set of predefined priorities. The use of a priority indicator has particular advantages when there is a lot of contention and the base station 2 has to decide which UE 1 to prioritize in terms of decoding or further resource allocation; and/or
- a RRC resume cause indicator used to indicate the resume cause in a RRC Resume Request (RRCResumeRequest) such as an emergency, a highPriorityAccess, a mt-Access indicator. The RRC resume cause indicator may be transmitted in the auxiliary information AUX_INFO to increase decoding probability and to decrease payload size of subsequent PUSCH (meaning increase decoding probability for PUSCH).

One example of a transmission cause indicator may be used for SDT. Alternatively, a transmission cause indicator may be used for different types of SDT. A transmission cause indicator may be an indicator indicating what is the message in the PUSCH. For example, considering a temperature sensor of the User Equipment 1 :

- the transmission cause may be initially set to 1;

- if alert temperature is too high, the transmission cause indicator may take the value 2;

- if the alert temperature is too low, the transmission cause indicator may take the value 3;

- If the alert temperature is in normal range, the transmission cause indicator may take the value 4;

- In case of sensor failure, the transmission cause indicator may take the value 5.

In the associated PUSCH transmission more details may be transmitted depending on the transmission cause indicator. For instance, if the transmission cause indicator is equal to 4 (sensor failure), the cause of the failure and related information may be transmitted in the PUSCH transmission and if the transmission cause indicator is equal to 3 (normal range), the current temperature may be transmitted in the PUSCH transmission.

Hence by decoding the outer code, the base station 2 (e.g. gNB) may already have access to the context of the data in the PUSCH transmission. Even if the PUSCH is not successfully decoded, the base station 2 can have information and can act accordingly, for example by shutting down the device.

It should be noted that the auxiliary information AUX_INFO can be decoded with higher reliability than the associated PUSCH transmission.

In some embodiments, the auxiliary information AUX_INFO may comprise a payload without a subsequent PUSCH transmission. The small payload may be transmitted directly on the PRACH through encoding over PRACH repetitions. For example, the small payload may indicate some kind of sensor state.

The payload may be of a small size. The payload may be use case-specific and/or may be used to signal the activation of a device in the communication system 100, such as a sensor, an actuator or an alarm (e.g. fire alarm). In such embodiments, the communication system 100 may be configured to ensure that the security protocols and context are established prior to the transmission.

The UE 1 may be any physical internet-enabled device/object provided with required hardware and/or software technologies enabling communication over Internet. The UE 1 may be any standard internet connected-devices such as desktop computers, servers, virtual machines laptops, smart-phones, tablets. In some applications of the disclosure, the UE 1 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present disclosure can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the disclosure. Moreover, any of the flow charts, sequence diagrams, and/or block diagrams may include more or fewer blocks than those illustrated consistent with embodiments of the disclosure.

While embodiments of the disclosure have been illustrated by a description of various examples, and while these embodiments have been described in considerable detail, it is not the intent of the applicant to restrict or in any way limit the scope of the appended claims to such detail.

In particular, the auxiliary information AUX_INFO encoded using the outer code may comprise a combination of one or more of the transmission parameters or transmission information (transmission parameters, transmission type, repetition configuration information, extension bits to extend preamble capacity, etc) described hereinafter in relation with some embodiments of the disclosure.

The embodiments of the invention thereby improve the transmission of UL data in MsgA of the two-step RACH procedure or in message 3 of the conventional 4-step RACH, without a limitation to two static PUSCH configuration information or the use of a signaling through preamble index.

The various embodiments of the disclosure therefore provide a RACH procedure dynamically adapted to the different kinds of traffic and provide an enhanced PRACH to carry small amounts of encoded information. This enables for example to adapt the subsequent PUSCH transmission parameters.

The communication system 100 according to the embodiments of the disclosure may be used in various applications such as Massive MTC (mMTC) to provide connectivity to a large number of devices that transmit sporadically a low amount of traffic, Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 100 may be a wireless network, for example a wireless IoT/M2M network representing low energy power-consumption/long battery life/low-latency/low hardware and operating cost/high connection density constraints such as low-power wide area networks and low-power short-range IoT networks.

The communication system 100 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

Additional advantages and modifications will readily appear to those skilled in the art. The disclosure in its broader aspects is therefore not limited to the specific details, representative methods, and illustrative examples shown and described.

Further, the embodiments of the invention are not limited to the 2-step RACH procedure and similarly apply to any RACH procedure including the transmission of a message similar to message MsgA from the UE 1 to the base station 2, such as the 4-step (message Msg1 transmission) from the UE 1 to the base station.

Also, although the disclosure has particular advantages when used for Small Data Transmission (SDT) as in such application the payload size of the RACH payload data can vary significantly, the embodiments of the disclosure may apply to other types of data transmissions.

**Claims**

1. A method of performing a RACH procedure to provide a User Equipment UE access to a network (3) in a communication system (100), the network comprising at least one base station, the RACH procedure comprising at least one step in which a RACH message is sent from the UE to the base station on one or more uplink channels, said message comprising a PRACH preamble transmission, the PRACH preamble being selected among a number of available preambles, the PRACH preamble transmission being made within a set of RACH slots, a RACH slot comprising a number of RACH occasions, the PRACH preamble being sent using a PRACH occasion corresponding to a time-frequency resource,

   wherein the method comprises encoding auxiliary information in said PRACH occasions and transmitting said auxiliary information to the base station (2),
   **characterized in that** said auxiliary information being encoded using an outer code and an additional code determined from the bits of the PRACH preamble.

2. The method according to claim 1, wherein the number of PRACH occasions is $N$ and the encoding of the auxiliary information comprises :

   - splitting an input message $m$ comprising said B channel bits into a first component comprising $B_v$ bits corresponding to the PRACH preamble bits and a second component comprising $B_h$ bits corresponding to the auxiliary information bits, such that $B = B_v + B_h$;
   - generating a vertical code from the first component of $B_v$ bits;
   - generating a horizontal code from the second component of $B_h$ bits, which provides the outer code;
   - combining said vertical code with said horizontal code which provides the encoded auxiliary information $\bar{r}_{vm}(n)$ in a PRACH occasion $n$ and auxiliary information $m$.

3. The method according to claim 2, wherein the combining step comprising determining the encoded auxiliary information as the product of the vertical code and the horizontal code or as the product of the vertical code, a phasor term and the horizontal code.

4. The method according to any preceding claim 2 and 3, wherein if the number $B_h$ is inferior or equal to $\log_2 N$, an orthogonal encoding scheme is used to generate the outer code W from the horizontal component, the PRACH preamble constituting the vertical code generated from the $B_v$ bits.

5. The method according to claim 4, wherein the orthogonal encoding scheme consists in determining the outer code W as a discrete Fourier transform (DFT) matrix of size N, and the codewords $w_m$ of the outercode W being the rows or the columns of the DFT matrix, such that $m = 0,1, ..., 2^{B_h-1}$.

6. The method according to any preceding claim 2 to 3, wherein if the number $B_h$ is superior to $\log_2 N$, the outer code is generated using a non-coherent linear code.

7. The method according to claim 5, wherein the outer code is chosen as a codeword $\lfloor m2^{-B_v} \rfloor$ from a $(N, B_h)$ linear error correcting code, having a length N and a rank ($B_h$), the linear error correcting code being represented by a generator matrix $G(B_h, N)$ given in the form:

$$G(B_h, N) = (I_N \quad G_{N \times (B_h)-N})$$

8. The method according to any preceding claim 2 to 7, wherein the vertical code is generated as a Zadoff-Chu sequence for the preamble v, and wherein the combining step is performed according to the following Equation:

$$\bar{r}_{vm}(n) = r_v w_{mn}$$

$w_{mn}$ being the $n^{th}$ component of codeword $w_m$ of the outer code $W$, $r_v$ denoting the Zadoff-Chu sequence generated for the preamble v transmitted in all PRACH occasions and $\bar{r}_{vm}(n)$ designates the encoded auxiliary information $m$ transmitted in PRACH occasion n.

9. The method according to any preceding claim, wherein the random access preamble is identified based on information on a number of synchronization signal blocks, SSBs, per RACH occasion, and the outer code is applied to time-consecutive RACH occasions per frequency resource per synchronization signal block SSB.

10. The method according to any preceding claim, wherein the random access preamble is identified based on information on a number of synchronization signal blocks, SSBs, per RACH occasion, a mapping being defined between a sync signal block, SSB, said mapping comprising a:

   - RRC parameter specifying the number of time-consecutive RACH Occasions for transmission of the PRACH preamble per SSB, and/or
   - another RRC parameter having integer value inferior or equal to the total number of consecutive ROs per SSB and defining the number of RACH Occasions per SSB for the PRACH preamble transmission, and/or
   - a further RRC parameter indicating the number of PRACH preambles per SSB reserved for the transmission of the PRACH preamble among a total number of available preambles.

11. The method according to any preceding claim, wherein the PRACH transmission uses Frequency Division Multiplexing, FDM, the PRACH preamble being repeated on the available frequency resources, with a same or different encoding on each resource, or the PRACH preamble being transmitted on a single frequency resource.

12. The method according to any preceding claim, wherein the auxiliary information comprises at least a part of user data and/or of user information and/or of control information related to subsequent PUSCH transmissions.

13. The method according to any preceding claim, wherein the RACH message is configured to transmit user data comprising D bits, the auxiliary information comprising B bits, and wherein:

   - if D<=B, the auxiliary information comprises the D bits;
   - if D>B, the RACH message further comprises a PUSCH transmission, the PRACH preamble and the PUSCH transmission being sent in a different time slot, and the auxiliary information comprises only a part of the user data bits comprising Dp bits, the remaining bits Du of the user data being transmitted in the PUSCH transmission.

14. The method according to any preceding claim, wherein the RACH message further comprises a PUSCH transmission, the PRACH preamble and the PUSCH transmission being sent in a different time slot, the encoded auxiliary information comprises PUSCH transmission parameters of the PUSCH transmission.

15. The method according to claim 14, wherein the PUSCH transmission parameters of the PUSCH transmission comprise at least one PUSCH transmission parameter among a MCS parameter, a Time-frequency resources parameter, a PUSCH Mapping Type parameter, a DMRS configuration parameter, a Redundancy Version parameter, and Repetition parameter.

16. The method of any preceding claim 14 and 15, wherein the auxiliary information comprises repetition mode information indicating whether repetition is used for the PUSCH transmission and/or information about the type of PUSCH Transmission.

17. The method of any preceding claim, wherein the auxiliary information comprises a number of extension bits extending the PRACH preamble capacity.

18. A User Terminal (1) configured to performing a RACH procedure to access to a network (3) in a communication system (100), the network comprising at least one base station, the RACH procedure comprising at least one step in which a RACH message is sent from the user terminal (1) to the base station on one or more uplink channels, said message comprising a PRACH preamble transmission, the PRACH preamble transmission being made within a set of RACH slots, a RACH slot comprising a number of RACH occasions, the PRACH preamble being sent using a PRACH occasion corresponding to a time-frequency resource, wherein the user terminal (1) comprises an encoding unit configured to encode auxiliary information in said PRACH occasions and transmit said encoded auxiliary information to the base station (2), **characterized in that** said auxiliary information being encoded using an outer code and an additional code determined from the bits of the PRACH preamble.

**Patentansprüche**

1.  Verfahren zum Durchführen einer RACH-Prozedur, um einer Benutzereinrichtung UE Zugriff auf ein Netzwerk (3) in einem Kommunikationssystem (100) bereitzustellen, wobei das Netzwerk mindestens eine Basisstation umfasst, wobei die RACH-Prozedur mindestens einen Schritt umfasst, in dem eine RACH-Nachricht von der UE auf einem oder mehreren Aufwärtsstreckenkanälen an die Basisstation gesendet wird, wobei die Nachricht eine PRACH-Präambel-Übertragung umfasst, wobei die PRACH-Präambel unter einer Anzahl von verfügbaren Präambeln ausgewählt ist, wobei die PRACH-Präambel-Übertragung innerhalb eines Satzes von RACH-Zeitschlitzen vorgenommen wird, wobei ein RACH-Zeitschlitz eine Anzahl von RACH-Gelegenheiten umfasst, wobei die PRACH-Präambel unter Verwendung einer PRACH-Gelegenheit gesendet wird, die einer Zeit-Frequenz-Ressource entspricht, wobei das Verfahren das Codieren von Hilfsinformationen in den PRACH-Gelegenheiten und das Übertragen der Hilfsinformationen an die Basisstation (2) umfasst, **dadurch gekennzeichnet, dass**:
    die Hilfsinformationen unter Verwendung eines äußeren Codes und eines zusätzlichen Codes, der aus den Bits der PRACH-Präambel bestimmt wird, codiert werden.

2.  Verfahren nach Anspruch 1, wobei die Anzahl von PRACH-Gelegenheiten $N$ ist und das Codieren der Hilfsinformationen Folgendes umfasst:

    - Aufteilen einer Eingangsnachricht $m$, welche die B Kanalbits umfasst, in eine erste Komponente, die $B_v$ Bits umfasst, die den PRACH-Präambel-Bits entsprechen, und eine zweite Komponente, die $B_h$ Bits umfasst, die den Hilfsinformationsbits entsprechen, sodass $B = B_v + B_h$;
    - Erzeugen eines vertikalen Codes aus der ersten Komponente von $B_v$ Bits;
    - Erzeugen eines horizontalen Codes aus der zweiten Komponente von $B_h$ Bits, was den äußeren Code bereitstellt;
    - Kombinieren des vertikalen Codes mit dem horizontalen Code, was die codierten Hilfsinformationen $\bar{r}_{vm}(n)$ in einer PRACH-Gelegenheit $n$ und die Hilfsinformationen $m$ bereitstellt.

3.  Verfahren nach Anspruch 2, wobei der Kombinierschritt das Bestimmen der codierten Hilfsinformationen als das Produkt des vertikalen Codes und des horizontalen Codes oder als das Produkt des vertikalen Codes, eines Zeigerterms und des horizontalen Codes umfasst.

4.  Verfahren nach einem der vorhergehenden Ansprüche 2 und 3, wobei, wenn die Anzahl $B_h$ kleiner oder gleich $\log_2 N$ ist, ein orthogonales Codierschema verwendet wird, um den äußeren Code W aus der horizontalen Komponente zu erzeugen, wobei die PRACH-Präambel den aus den $B_v$ Bits erzeugten vertikalen Code ausmacht.

5.  Verfahren nach Anspruch 4, wobei das orthogonale Codierschema darin besteht, den äußeren Code W als eine Matrix der diskreten Fourier-Transformation (DFT) der Größe N zu bestimmen, und wobei die Codewörter $w_m$ des äußeren Codes W die Zeilen oder die Spalten der DFT-Matrix sind, sodass m = 0, 1, ..., $2^{Bh-1}$.

6.  Verfahren nach einem der vorhergehenden Ansprüche 2 bis 3, wobei, wenn die Anzahl $B_h$ größer als $\log_2 N$ ist, der äußere Code unter Verwendung eines nicht kohärenten linearen Codes erzeugt wird.

7.  Verfahren nach Anspruch 5, wobei der äußere Code als Codewort $\lfloor m 2^{-B_v} \rfloor$ aus einem linearen Fehlerkorrekturcode $(N, B_h)$ mit einer Länge N und einem Rang $(B_h)$ ausgewählt ist, wobei der lineare Fehlerkorrekturcode durch eine Generatormatrix $G(B_h, N)$ dargestellt wird, die in der folgenden Form gegeben ist:
    -

$$G(B_h, N) = (I_N \ G_{N \times (B_h) - N})$$

8.  Verfahren nach einem der vorhergehenden Ansprüche 2 bis 7, wobei der vertikale Code als eine Zadoff-Chu-Folge für die Präambel v erzeugt wird, und wobei der Kombinierschritt gemäß der folgenden Gleichung durchgeführt wird:

$$\bar{r}_{vm}(n) = r_v w_{mn}$$

wobei $w_{mn}$ die n-te Komponente des Codeworts $w_m$ des äußeren Codes W ist, $r_v$ die die für die Präambel v erzeugte Zadoff-Chu-Folge bezeichnet, die in allen PRACH-Gelegenheiten übertragen wird, und $\overline{r}_{vm}(n)$ die codierten Hilfsinformationen *m* bezeichnet, die bei der PRACH-Gelegenheit n übertragen werden.

9. Verfahren nach einem der vorhergehenden Ansprüche, wobei die Präambel für wahlfreien Zugriff auf der Grundlage von Informationen über eine Anzahl von Synchronisationssignalblöcken, SSBs, pro RACH-Gelegenheit identifiziert wird, und der äußere Code auf zeitlich aufeinanderfolgende RACH-Gelegenheiten pro Frequenzressource pro Synchronisationssignalblock SSB angewendet wird.

10. Verfahren nach einem der vorhergehenden Ansprüche, wobei die Präambel für wahlfreien Zugriff auf der Grundlage von Informationen über eine Anzahl von Synchronisationssignalblöcken, SSBs, pro RACH-Gelegenheit identifiziert wird, wobei eine Zuordnung zwischen einem Sync-Signalblock, SSB, definiert ist, wobei die Zuordnung Folgendes umfasst:

- einen RRC-Parameter, der die Anzahl von zeitlich aufeinanderfolgenden RACH-Gelegenheiten für eine Übertragung der PRACH-Präambel pro SSB festlegt, und/oder
- einen anderen RRC-Parameter mit einem ganzzahligen Wert, der kleiner oder gleich der Gesamtanzahl von aufeinanderfolgenden RACH-Gelegenheiten pro SSB ist und die Anzahl von RACH-Gelegenheiten pro SSB für die Übertragung der PRACH-Präambel definiert, und/oder
- einen weiteren RRC-Parameter, der die Anzahl von PRACH-Präambeln pro SSB, die für die Übertragung der PRACH-Präambel reserviert sind, unter einer Gesamtanzahl von verfügbaren Präambeln angibt.

11. Verfahren nach einem der vorhergehenden Ansprüche, wobei die PRACH-Übertragung das Frequenzmultiplexverfahren (FDM) verwendet, wobei die PRACH-Präambel auf den verfügbaren Frequenzressourcen mit einer gleichen oder einer unterschiedlichen Codierung auf jeder Ressource wiederholt wird, oder wobei die PRACH-Präambel auf einer einzigen Frequenzressource übertragen wird.

12. Verfahren nach einem der vorhergehenden Ansprüche, wobei die Hilfsinformationen mindestens einen Teil von Benutzerdaten und/oder von Benutzerinformationen und/oder von Steuerinformationen, die sich auf nachfolgende PUSCH-Übertragungen beziehen, umfassen.

13. Verfahren nach einem der vorhergehenden Ansprüche, wobei die RACH-Nachricht dafür konfiguriert ist, Benutzerdaten zu übertragen, die D Bits umfassen, wobei die Hilfsinformationen B Bits umfassen, und wobei:

- wenn D <= B, umfassen die Hilfsinformationen die D Bits;
- wenn D > B, umfasst die RACH-Nachricht ferner eine PUSCH-Übertragung, wobei die PRACH-Präambel und die PUSCH-Übertragung in einem unterschiedlichen Zeitschlitz gesendet werden, und die Hilfsinformationen nur einen Teil der Benutzerdatenbits umfassen, welcher Dp Bits umfasst, wobei die verbleibenden Du Bits der Benutzerdaten in der PUSCH-Übertragung übertragen werden.

14. Verfahren nach einem der vorhergehenden Ansprüche, wobei die RACH-Nachricht ferner eine PUSCH-Übertragung umfasst, wobei die PRACH-Präambel und die PUSCH-Übertragung in einem unterschiedlichen Zeitschlitz gesendet werden, wobei die codierten Hilfsinformationen PUSCH-Übertragungsparameter der PUSCH-Übertragung umfassen.

15. Verfahren nach Anspruch 14, wobei die PUSCH-Übertragungsparameter der PUSCH-Übertragung mindestens einen PUSCH-Übertragungsparameter unter einem MCS-Parameter, einem Zeit-Frequenz-Ressourcen-Parameter, einem PUSCH-Zuordnungstyp-Parameter, einem DMRS-Konfiguration-Parameter, einem Redundanzversion-Parameter und einem Wiederholung-Parameter umfassen.

16. Verfahren nach einem der vorhergehenden Ansprüche 14 und 15, wobei die Hilfsinformationen Wiederholungsmodusinformationen, die angeben, ob für die PUSCH-Übertragung eine Wiederholung verwendet wird, und/oder Informationen über den Typ der PUSCH-Übertragung umfassen.

17. Verfahren nach einem der vorhergehenden Ansprüche, wobei die Hilfsinformationen eine Anzahl von Erweiterungsbits umfassen, welche die Kapazität der PRACH-Präambel erweitern.

18. Benutzerendgerät (1), das dafür konfiguriert ist, eine RACH-Prozedur durchzuführen, um auf ein Netzwerk (3) in einem Kommunikationssystem (100) zuzugreifen, wobei das Netzwerk mindestens eine Basisstation umfasst, wobei die RACH-Prozedur mindestens einen Schritt umfasst, in dem eine RACH-Nachricht von dem Benutzerendgerät (1) auf einem oder mehreren Aufwärtsstreckenkanälen an die Basisstation gesendet wird, wobei die Nachricht eine PRACH-Präambel-Übertragung umfasst, wobei die PRACH-Präambel-Übertragung innerhalb eines Satzes von RACH-Zeitschlitzen vorgenommen wird, wobei ein RACH-Zeitschlitz eine Anzahl von RACH-Gelegenheiten umfasst, wobei die PRACH-Präambel unter Verwendung einer PRACH-Gelegenheit gesendet wird, die einer Zeit-Frequenz-Ressource entspricht,

wobei das Benutzerendgerät (1) eine Codiereinheit umfasst, die dafür konfiguriert ist, Hilfsinformationen in den PRACH-Gelegenheiten zu codieren und die codierten Hilfsinformationen an die Basisstation (2) zu übertragen, **dadurch gekennzeichnet, dass**:

die Hilfsinformationen unter Verwendung eines äußeren Codes und eines zusätzlichen Codes, der aus den Bits der PRACH-Präambel bestimmt wird, codiert werden.

**Revendications**

1. Procédé d'exécution d'une procédure RACH pour fournir à un équipement utilisateur UE l'accès à un réseau (3) dans un système de communication (100), le réseau comprenant au moins une station de base, la procédure RACH comprenant au moins une étape dans laquelle un message RACH est envoyé de l'UE à la station de base sur un ou plusieurs canaux de liaison montante, ledit message comprenant une transmission de préambule PRACH, le préambule PRACH étant sélectionné parmi un certain nombre de préambules disponibles, la transmission de préambule PRACH étant effectuée dans un ensemble d'intervalles RACH, un intervalle RACH comprenant un certain nombre d'occasions RACH, le préambule PRACH étant envoyé en utilisant une occasion PRACH correspondant à une ressource temps-fréquence,

dans lequel le procédé comprend le codage d'informations auxiliaires dans lesdites occasions PRACH et la transmission desdites informations auxiliaires à la station de base (2), **caractérisé en ce que** lesdites informations auxiliaires sont codées en utilisant un code extérieur et un code supplémentaire déterminé à partir des bits du préambule PRACH.

2. Procédé selon la revendication 1, dans lequel le nombre d'occasions PRACH est $N$ et le codage des informations auxiliaires comprend :

- la division d'un message d'entrée $m$ comprenant lesdits bits de canal B en une première composante comprenant des bits $B_v$ correspondant aux bits de préambule PRACH et une deuxième composante comprenant des bits $B_h$ correspondant aux bits d'informations auxiliaires, de telle sorte que $B = B_v + B_h$ ;
- la génération d'un code vertical à partir de la première composante de bits $B_v$ ;
- la génération d'un code horizontal à partir de la deuxième composante de bits $B_h$, ce qui fournit le code extérieur ;
- la combinaison dudit code vertical avec ledit code horizontal, ce qui fournit les informations auxiliaires codées $\bar{r}_{vm}(n)$ dans une occasion PRACH $n$ et les informations auxiliaires m.

3. Procédé selon la revendication 2, dans lequel l'étape de combinaison comprenant la détermination des informations auxiliaires codées en tant que produit du code vertical et du code horizontal ou en tant que produit du code vertical, d'un terme de phaseur et du code horizontal.

4. Procédé selon l'une quelconque des revendications précédentes 2 et 3, dans lequel si le nombre $B_h$ est inférieur ou égal à $\log_2 N$, un schéma de codage orthogonal est utilisé pour générer le code extérieur W à partir de la composante horizontale, le préambule PRACH constituant le code vertical généré à partir des bits $B_v$.

5. Procédé selon la revendication 4, dans lequel le schéma de codage orthogonal consiste à déterminer le code extérieur W comme une matrice de transformée de Fourier discrète (DFT) de taille N, et les mots de code $w_m$ du code extérieur W étant les lignes ou les colonnes de la matrice DFT, tels que m = 0, 1, ..., $2^{B_h-1}$.

6. Procédé selon l'une quelconque des revendications précédentes 2 à 3, dans lequel si le nombre $B_h$ est supérieur à $\log_2 N$, le code extérieur est généré en utilisant un code linéaire non cohérent.

7. Procédé selon la revendication 5, dans lequel le code extérieur est choisi comme mot de code $\lfloor m2^{-B_v} \rfloor$ d'un code

linéaire correcteur d'erreurs (N, $B_h$), ayant une longueur N et un rang ($B_h$), le code linéaire correcteur d'erreurs étant représenté par une matrice génératrice $G(B_h, N)$ donnée sous la forme :

-

$$G(B_h, N) = (I_N \, G_{N \times (B_h) - N})$$

8. Procédé selon l'une quelconque des revendications précédentes 2 à 7, dans lequel le code vertical est généré comme une séquence de Zadoff-Chu pour le préambule v, et dans lequel l'étape de combinaison est réalisée selon l'équation suivante :

$$\bar{r}_{vm}(n) = r_v w_{mn}$$

$w_{mn}$ étant la $n^{ième}$ composante du mot de code $w_m$ du code extérieur W, $r_v$ désignant la séquence de Zadoff-Chu générée pour le préambule v transmis dans toutes les occasions PRACH et $\bar{r}_{vm}(n)$ désignant les informations auxiliaires codées m transmises dans l'occasion PRACH n.

9. Procédé selon l'une quelconque des revendications précédentes, dans lequel le préambule d'accès aléatoire est identifié sur la base d'informations relatives à un nombre de blocs de signaux de synchronisation (SSB) par occasion RACH, et le code extérieur est appliqué à des occasions RACH consécutives dans le temps par ressource de fréquence et par bloc de signaux de synchronisation SSB.

10. Procédé selon l'une quelconque des revendications précédentes, dans lequel le préambule d'accès aléatoire est identifié sur la base d'informations relatives à un nombre de blocs de signaux de synchronisation, SSB, par occasion RACH, une mise en correspondance étant définie entre un bloc de signaux de synchronisation, SSB, ladite mise en correspondance comprenant un :

- paramètre RRC spécifiant le nombre d'occasions RACH consécutives dans le temps pour une transmission du préambule PRACH par SSB, et/ou
- autre paramètre RRC ayant une valeur entière inférieure ou égale au nombre total de OR consécutives par SSB et définissant le nombre d'occasions RACH par SSB pour la transmission du préambule PRACH, et/ou
- paramètre RRC supplémentaire indiquant le nombre de préambules PRACH par SSB réservés à la transmission du préambule PRACH parmi un nombre total de préambules disponibles.

11. Procédé selon l'une quelconque des revendications précédentes, dans lequel la transmission PRACH utilise le multiplexage par répartition en fréquence, FDM, le préambule PRACH étant répété sur les ressources de fréquence disponibles, avec un codage identique ou différent sur chaque ressource, ou le préambule PRACH étant transmis sur une seule ressource de fréquence.

12. Procédé selon l'une quelconque des revendications précédentes, dans lequel les informations auxiliaires comprennent au moins une partie de données d'utilisateur et/ou d'informations d'utilisateur et/ou d'informations de commande relatives à des transmissions PUSCH ultérieures.

13. Procédé selon l'une quelconque des revendications précédentes, dans lequel le message RACH est configuré pour transmettre des données d'utilisateur comprenant D bits, les informations auxiliaires comprenant B bits, et dans lequel :

- si D <= B, les informations auxiliaires comprennent les D bits ;
- si D > B, le message RACH comprend en outre une transmission PUSCH, le préambule PRACH et la transmission PUSCH étant envoyés dans un intervalle de temps différent, et les informations auxiliaires ne comprennent qu'une partie des bits de données d'utilisateur comprenant Dp bits, les bits restants Du des données d'utilisateur étant transmis dans la transmission PUSCH.

14. Procédé selon l'une quelconque des revendications précédentes, dans lequel le message RACH comprend en outre une transmission PUSCH, le préambule PRACH et la transmission PUSCH étant envoyés dans un intervalle de temps différent, les informations auxiliaires codées comprennent des paramètres de transmission PUSCH de la transmission PUSCH.

**15.** Procédé selon la revendication 14, dans lequel les paramètres de transmission PUSCH de la transmission PUSCH comprennent au moins un paramètre de transmission PUSCH parmi un paramètre MCS, un paramètre de ressources temps-fréquence, un paramètre de type de mappage PUSCH, un paramètre de configuration DMRS, un paramètre de version de redondance et un paramètre de répétition.

**16.** Procédé selon l'une quelconque des revendications précédentes 14 et 15, dans lequel les informations auxiliaires comprennent des informations sur le mode de répétition indiquant si une répétition est utilisée pour la transmission PUSCH et/ou des informations sur le type de transmission PUSCH.

**17.** Procédé selon l'une quelconque des revendications précédentes, dans lequel les informations auxiliaires comprennent un nombre de bits d'extension étendant la capacité de préambule PRACH.

**18.** Terminal d'utilisateur (1) configuré pour réaliser une procédure RACH pour accéder à un réseau (3) dans un système de communication (100), le réseau comprenant au moins une station de base, la procédure RACH comprenant au moins une étape dans laquelle un message RACH est envoyé du terminal d'utilisateur (1) à la station de base sur un ou plusieurs canaux de liaison montante, ledit message comprenant une transmission de préambule PRACH, la transmission de préambule PRACH étant effectuée à l'intérieur d'un ensemble d'intervalles RACH, un intervalle RACH comprenant un certain nombre d'occasions RACH, le préambule PRACH étant envoyé en utilisant une occasion PRACH correspondant à une ressource temps-fréquence,

dans lequel le terminal d'utilisateur (1) comprend une unité de codage configurée pour coder des informations auxiliaires dans lesdites occasions PRACH et transmettre lesdites informations auxiliaires codées à la station de base (2), **caractérisé en ce que**
lesdites informations auxiliaires sont codées en utilisant un code extérieur et un code supplémentaire déterminé à partir des bits du préambule PRACH.

**FIGURE 1**

| CP | PRACH sequence | PRACH sequence repetitions |
|----|----------------|----------------------------|

Sequence duration

**FIGURE 2A**

200

Encoding auxiliary information

202

Transmitting the auxiliary information to the base station

**FIGURE 2B**

**FIGURE 3**

2 symbols

| CP | w0 | w0 | | w1 | w1 | | w2 | w2 | | w3 | w3 | | w4 | w4 | | w5 | w5 |

Length 139-ZC

repetition

**FIGURE 4**

101

<u>1</u>

1010     1012     1014

| Splitter |   →   | Outer generator |   $\mathbf{w}$ →   | Encoding unit |

**FIGURE 5A**

1014

140

141

142

Mapper

Sequence encoder

MODULATOR

**FIGURE 5B**

| CP | PRACH sequence |
|----|----------------|

**FIGURE 6**

1 symbol

| | w0 | | w1 | | w2 | | w3 | | w4 | | w5 | | w6 | | w7 | ... |

CP

Length 139-ZC

**FIGURE 7**

2 symbols (C0)   1 symbol

| | | | w0 | | w1 | | w2 | | w3 | | w4 | | w5 | | w6 | | w7 | ... |

Length 139-ZC

**FIGURE 8**

**FIGURE 9**

**FIGURE 10**

**FIGURE 11**

**FIGURE 12**

**FIGURE 13**

**FIGURE 14**

## REFERENCES CITED IN THE DESCRIPTION

### Patent documents cited in the description

- GB 2562100 A
- EP 20305929 A

- EP 20305929

### Non-patent literature cited in the description

- Study on Non-Orthogonal Multiple Access (NOMA) for NR V16.0.0. *3GPP TR 38.812,* December 2018

- **ZTE.** Revised WID on 2-step RACH for NR. *RP-200085,* 2020
- **NOKIA et al.** On 2-step RACH Channel Structure. *3GPP document R1-1906746*